(19) Europäisches Patentamt
European Patent Office
Office européen des brevets

(11) **EP 4 343 621 A1**

(12) **EUROPEAN PATENT APPLICATION**

(43) Date of publication:
**27.03.2024  Bulletin 2024/13**

(21) Application number: **22306379.3**

(22) Date of filing: **20.09.2022**

(51) International Patent Classification (IPC):
**G06N 3/044** (2023.01)   **G06N 10/40** (2022.01)
**G06N 10/60** (2022.01)

(52) Cooperative Patent Classification (CPC):
**G06N 3/044; G06N 10/40; G06N 10/60**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Pasqal
91300 Massy (FR)**

(72) Inventors:
• **THABET, Slimane
91300 Massy (FR)**
• **FOUILLAND, Romain
44380 Pornichet (FR)**
• **HENRIET, Loic
91300 Massy (FR)**

(74) Representative: **Slingsby Partners LLP
1 Kingsway
London WC2B 6AN (GB)**

(54) **METHOD AND SYSTEM FOR USING A QUANTUM COMPUTER TO GENERATE A GRAPH NEURAL NETWORK**

(57)  There is presented a method for generating a Graph Neural Network, GNN. The GNN comprising a first layer and a second layer subsequent to the first layer. The GNN is associated with a graph comprising a plurality of graph nodes and edges. For the first layer, a first graph node is represented by a first set of one or more first node features whilst a second graph node is represented by a first set of one or more second node features. The first and second graph node being connected by an edge. The method comprises generating, for the second layer, a second set of one or more first node features. Electromagnetic, EM, radiation is input to at least a first qubit and a second qubit of a quantum computer. The first graph node represented by the first qubit. The second graph node represented by the second qubit. The EM radiation interacts the first qubit with the second qubit. The qubit quantum states are measured and an aggregation factor is determining from the measurements that is used with the first set of one or more second node features to generate the second set of one or more features. The method then generates the GNN at least based upon the second set of one or more first node features.

Fig. 5

EP 4 343 621 A1

**Description**

Field of the invention

The present invention is in the field of Graph Neural networks (GNN's), in particular, but not limited to, Graph Attention Networks, GATs, or Graph Transformers.

Background

GNNs are, currently, a growing area of research and have a wide range of applications including: social science, such as social recommender systems; chemistry, including molecular property prediction; and other applications. GNNs typically use graph node features as different inputs and use a plurality of Neural Network (NN) layers to obtain an output set of node features that can be compared to training data to generate a loss function that, with NN back propagation, can be used to train the GNN.

GNNs can be used to solve different types of graph problems, however despite this, current GNNs that have been trained and are run on standard electronic computers may fail to solve certain graph problems. Furthermore, in general, current GNNs are still Neural Network (NN) based methods that output solutions that may be subject to degrees of solution inaccuracy.

Summary

In a first aspect there is presented a method for generating a Graph Neural Network, GNN, wherein: i) the GNN comprises a plurality of layers wherein: one of the said layers is a first layer; the first layer being the initial layer or a hidden layer in the GNN; and, another one of the said layers is a second layer; the second layer being subsequent to the first layer; ii) the GNN being associated with a graph comprising a plurality of graph nodes and edges; iii) for the first layer: at least a first graph node of the plurality of graph nodes is represented by a first set of one or more first node features; at least a second graph node of the plurality of graph nodes is represented by a first set of one or more second node features; the first graph node being connected to the second graph node by one of the edges; the method comprising: I) generating, for the second layer, a second set of one or more first node features by: a) inputting electromagnetic, EM, radiation to at least a first qubit and a second qubit of a quantum computer; the first graph node represented by at least the first qubit; the second graph node represented by at least the second qubit; the EM radiation interacting the first qubit with the second qubit; b) measuring the quantum states of the first and second qubits after the start of the inputting of the EM radiation; c) determining an aggregation factor from the measured quantum states; and, d) using the aggregation factor and the first set of one or more second node features to generate the second set of one or more features for the first graph node for the second layer; and, II) generating the GNN at least based upon the generated second set of one or more first node features.

The above method may be adapted according to any way described herein, including, but not limited to any one or more of the following options.

One or more classical computers may be optionally used to perform any one or more, but not limited to, the following steps of the above method: measuring the quantum states of the first and second qubits after the start of the inputting of the EM radiation; determining the aggregation factor from the measured quantum states; using the aggregation factor and the first set of one or more second node features to generate the second set of one or more features for the first graph node for the second layer; iv) generating the GNN at least based upon the generated second set of one or more first node features. The one or more classical computers may be optionally used to perform other steps of the method including those described below and elsewhere herein as well as optionally: determining a control signal for outputting to an EM source for outputting the EM radiation to the qubits; determining any of the details of the input graph including any one or more of, but not limited to: the number of nodes, number of edges, node weightings; node directionality; features of initial graph node or edge vectors.

At any point, any of the features or otherwise values determined, received or generated by the method may be stored in a memory device. The method may further retrieve such stored data as required. The memory may be communicatively coupled to any one or more classical computer processors configured to perform the steps of the method.

The aggregation factor may be a factor used by the method to perform at least part of the aggregation process of the GNN. The quantum computer may use, for its qubits, any of, but not limited to: atoms; ions; photons; material structures; devices.

The method may be configured such that the quantum computer comprising a neutral atom quantum computer.

The neutral atom quantum computer may comprise rubidium atoms as the qubits.

The method may be configured such that the neutral atom quantum computer is operated in an analogue mode of operation.

The method may use an XY or Ising Hamiltonian to set-up the quantum computer.

The method may be configured such that each of the measured quantum states correspond to a Rydberg energy level.

The method may be configured such that the aggregation factor comprises a weighting factor for the edge connecting the first node and the second node.

The method may be configured such that determining the aggregation factor comprises applying a plurality of Hermitian operators to the measured results.

The measured results of the qubits provide either a first or a second state, which may correspond to 0 or 1.

The method may be configured such that the Hermitian operators comprise Pauli operators.

The method may be configured such that determining the aggregation factor comprises using a first set of Pauli operators; the first set of Pauli operators comprising a first Pauli operator and a second Pauli operator; the method comprising: I) applying the first Pauli operator to a measured state of the first qubit to provide a first result; II) applying the second Pauli operator to a measured state of the second qubit to provide a second result; III) determining a first observable using the first result and the second result; the first observable used to determine the aggregation factor.

The first and second Pauli operators may be the same operator or a different operator. The Pauli operators may be Pauli matrices. The resulting product of: I) the application of the first Pauli matrix; and II) the application of the second Pauli matrix may be an observable. The method may determine the aggregation factor for a particular node (e.g., the first node) using a plurality of different observables. Each observable being different to the other observables such that at least one of the qubits in an observable has a different Pauli matrix applied compared to another observable. This determination may include a summation of the observable results. The summation may be averaged. The averaging may be calculated by dividing the summed observable results by the number of observables used to determine the aggregation factor. An example of this is shown in equation 18a.

The method may be configured such that determining the aggregation factor comprises using a second set of Pauli operators; the second set of Pauli operators comprising a first Pauli operator and a second Pauli operator; wherein at least one of the Pauli operators of the first set is different to the second set; the method comprising: I) applying the first Pauli operator, of the second set, to a measured state of the first qubit to provide a third result; II) applying the second Pauli operator, of the second set, to a measured state of the second qubit to provide a fourth result; III) determining a second observable using the third result and the fourth result; the first and second observables used to determine the aggregation factor.

The aggregation factor may further be generated by performing the method steps a) and b), in the above method of the first aspect, multiple times wherein the same observable is determined multiple times for the same graph node, for the same layer, for the same forward propagation. Each execution of at least a) and b) as detailed above may be referred to as a 'run' of the quantum computer. The resulting observable of each run may be used to determine the aggregation factor. A particular observable may be determined by averaging the summed observable results over the number of runs. The above multiple runs used to determine an average observable, may be used for determining any one or more of the observables; which in turn are then used to determine the aggregation factor.

The method may further comprise providing an observable weight to at least one of the first or second observables.

A different observable weight may respectively be applied to any one or more of the observables. An example of this is shown in equation 18b. The weighted observable may be the product of an observable weight $\gamma_n$ and its respective observable. Each weighted observable may comprise a different observable weight to other weighted observables. The observable weights may be modified for each subsequent forward propagation through the layers. The observable weights may be modified based on comparing the output from a current forward propagation through the layers to training data.

The method may be configured such that: a further graph node, of the plurality of graph nodes, that is different to the first graph node, is represented for the first layer by a first set of one or more further node features, the further graph node being connected to another of the graph nodes by one of the edges; the method may further comprise: generating, at least partially using the quantum computer, a second set of one or more further node features for the further graph node for the second layer.

The generation of the second set of one or more further node features may comprise: i) inputting electromagnetic, EM, radiation to at least two of the qubits of the quantum computer; the further graph node represented by at least the one of the qubits that is different to the first qubit; the other said graph node represented by at least another of the qubits that is different to the qubit representing the further graph node; the EM radiation interacting the qubits representing the further graph node and said other graph node; measuring the quantum states of the abovesaid qubits after the start of the inputting of the EM radiation; determining a further aggregation factor from the measured quantum states; and, using the further aggregation factor and the first set of one or more second node features to generate the second set of one or more features for the first graph node for the second layer; ii) generating the GNN at least further based upon the generated second set of one or more further node features.

The EM radiation input for the first and second nodes may be the same EM radiation as the EM radiation for the further and 'other' nodes, or the EM radiation may be different.

The aggregation factor and the further aggregation factor, or otherwise, a plurality of similar determined aggregation factors may be formed into an aggregation factor matrix for use in determining node features for the second layer. The determination of node features for the second layer may comprise using a weights matrix comprising weighting values between neural network nodes. Node features from multiple graph nodes may be formed into a node feature matrix for the first layer. A node feature matrix for the second layer may be determined using: an activation function: the node feature matrix for the first layer; the weights matrix for propagating between the first and second layers; an aggregation factor matrix for use in determining node features for the second layer. An example of such a calculation is shown in equation 2 below wherein the abovementioned components of the calculation are multiplied together. In general, a node feature vector for a particular node for the second layer may be determined using: an activation function: the node feature vector for the first layer; a weight for propagating between the first and second layers; the aggregation factor for that node for determining node features for the second layer.

The method may further comprise generating a plurality of aggregation factors for use in generating, for the second layer, a second set of one or more first node features.

The method may generate a Head from the plurality of aggregation factors.

The method may be configured such that: A) the step of generating the GNN at least based upon the generated second set of one or more first node features, comprises: a first forward propagation through the layers; a second forward propagation through the layers; B) the GNN comprises an output layer comprising one or more output data; the method may comprise: comparing the GNN output data from the first forward propagation to training data; modifying the EM radiation for the second forward propagation based on the comparison.

The modification of the EM radiation may comprise any one or more of, but not limited to: changing the Rabi frequency of at least a portion of the EM radiation; changing the detuning of at least a portion of the EM radiation.

The method may determine a loss function by comparing the GNN output to training data. The method may use neural network back propagation after determining the loss function and before implementing the second forward propagation. The method may use two or more forward propagations through the layers and one or more back propagations.

The method may further comprise outputting the modified EM radiation.

There is also presented a non-transitory computer readable medium comprising instructions for executing any one or more of the methods described above. The method may be a computer implemented method. In this respect computer implemented is intended to mean implemented at least partially by a classical computer.

In a second aspect there is presented a system for generating a Graph Neural Network, GNN, wherein: i) the GNN comprises a plurality of layers wherein: one of the said layers is a first layer; the first layer being the initial layer or a hidden layer in the GNN; and, another one of the said layers is a second layer; the second layer being subsequent to the first layer; ii) the GNN being associated with a graph comprising a plurality of graph nodes and edges; iii) for the first layer: at least a first graph node of the plurality of graph nodes is represented by a first set of one or more first node features; at least a second graph node of the plurality of graph nodes is represented by a first set of one or more second node features; the first graph node being connected to the second graph node by one of the edges; the system comprising a computer processor configured to: I) generate, for the second layer, a second set of one or more first node features by: outputting one or more control signals to an electromagnetic, EM, source for inputting electromagnetic radiation to at least a first qubit and a second qubit of a quantum computer; the first graph node represented by at least the first qubit; the second graph node represented by at least the second qubit; the EM radiation interacting the first qubit with the second qubit; receiving measured quantum states of the first and second qubits after the start of the inputting of the EM radiation; determining an aggregation factor from the measured quantum states; and, using the aggregation factor and the first set of one or more second node features to generate the second set of one or more features for the first graph node for the second layer; and, II) generate the GNN at least based upon the generated second set of one or more first node features.

Optional features described above for the method may equally be optional features for the system. Furthermore, the above system may be adapted according to any way described herein, including, but not limited to any one or more of the following options.

The system may further comprise the quantum computer.

The system may further comprise any one or more of, but not limited to: a device for measuring the quantum states of the said qubits, such as a camera; one or more EM sources for inputting EM radiation to the qubits; one or more controllers for controlling any of the devices used to operate the quantum computer wherein the said controllers are configured to send and/or receive communications with the computer processor. Such communications may be via wireless or wired communications. The signals sent between the computer processor may be, but are not limited to: electrical or optical.

Brief description of the drawings

Figure 1 is an example of a graph;

Figure 2 is an example of a neural network for the graph of figure 1;

Figure 3 is an example of a graph similar to figure 1 with aggregation weightings;

Figure 4 is an example of EM profiles for the quantum computer;

Figure 5 is a schematic representation of an example of quantum enhancing a GNN;

Figure 6 is an example of a method of quantum enhancing a GNN;

Figure 7 is a schematic example of a design pipeline for a GNN model;

Figure 8 is a schematic example of computational modules for use in generating a GNN;

Figure 9 is a schematic example of using a quantum attention head;

Figure 10 is a schematic example of using a multi-head layer;

Figure 11 is a schematic example of a neutral atom quantum computer for use with the methods and systems described herein;

Figure 12 is a further schematic example of a neutral atom quantum computer for use with the methods and systems described herein;

Figures 13a-c schematically show transitions between hyperfine ground and Rydberg states;

Figures 14a and 14b schematically show an example of a Rydberg blockade.

Detailed description

There is presented methods and systems in the field of Graph Neural Networks (GNNs). The generation of GNNs in this application are enhanced by the use of one or more Quantum Computers (QC).
The methods and systems presented herein may be used for any one or more of, but not limited to, the following graph problems: Node Classification, Graph Classification, Graph visualization, Link prediction and Graph clustering.
Different types of quantum computers can be used including different types of physical mechanisms underpinning the quantum system, hence types of qubits. Furthermore, the GNNs presented herein can be enhanced by different operational types of quantum computing, in particular gate quantum computing or analogue quantum computing. An example of a neutral atom QC that may be used to enhance the generation of a GNN is presented elsewhere herein, but it should be understood that this neutral QC example is merely a preferred example of a QC.

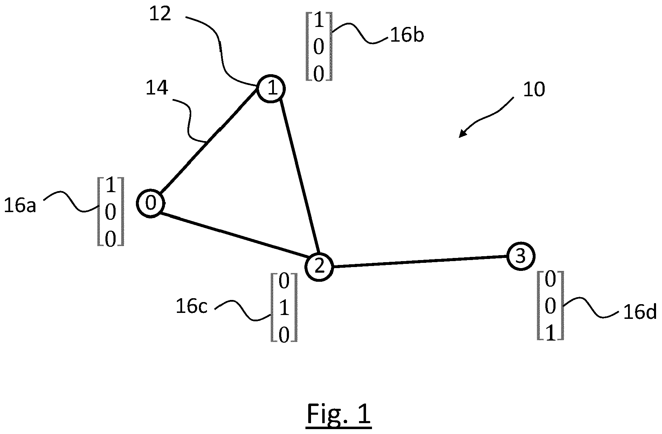

Figure 1 shows a simple four-node graph 10 with nodes 12 labelled 0, 1, 2, 3 and four connecting edges 14. Each node 12 has a plurality of features which are represented by data values in a respective feature vector 16a-d for each of the nodes 12. Nodes, in general, may be represented by feature vectors containing one or a plurality of features. These features may be represented by numerical values. Vector 16a represents the node 0; vector 16b represents the node 1; vector 16c represents the node 2; vector 16d represents the node 3. The vectors 16a-d may also be respectively referred to as:

$$h_0^0, h_1^0, h_2^0, h_3^0$$

The subscript number for 'h', above, represents the node number whilst the superscript represents the stage of the graph in a GNN. The graph 10 in figure 1 is the initial graph that the GNN is trained upon, as such the feature vectors 16a-d in figure 1 are the starting feature vectors of the nodes, hence have a superscript value of zero. Other feature vectors calculated for the same nodes when training the GNN have other non-zero superscript values.

This graph 10 may represent data for a particular problem, for example, a molecule wherein the nodes 12 are atoms; the edges 14 are bonds and the feature vectors 16a-d define the type of atom. Other problems may also be addressed with the methods and systems described herein. A GNN may be generated for solving a problem associated with the graph, for example, taking the same molecule example above, using the GNN to determine the energy of the molecule. Other types of graphs, graph data and graph problem may be used however graph 10 in figure 1 is used to describe the principles.

A global feature vector $H^0$ may describe the node features as shown in equation 1.

$$H^0 = \begin{bmatrix} 1 & 0 & 0 \\ 1 & 0 & 0 \\ 0 & 1 & 0 \\ 0 & 0 & 1 \end{bmatrix}$$

[Equ. 1]

Again, the superscript value zero represents the stage of the graph 10 in a GNN.

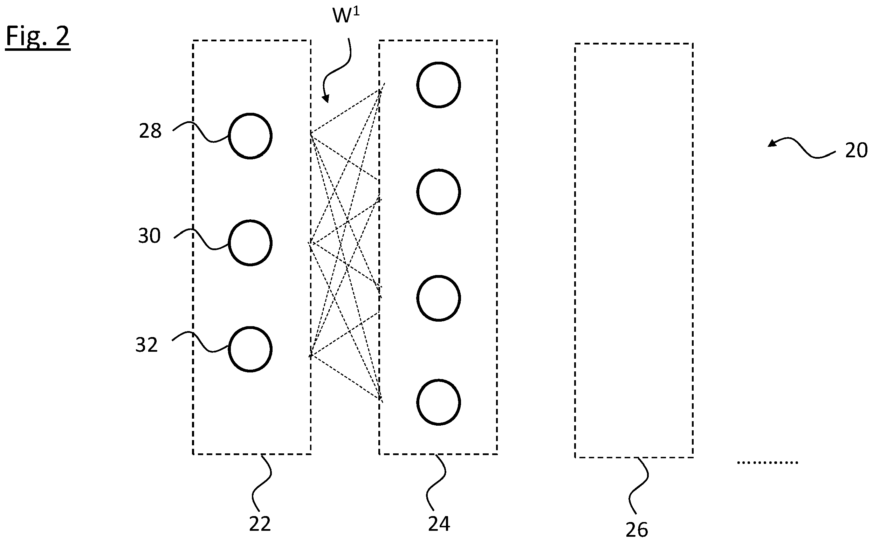

There now follows a description of how a Graph Convolutional Network (GCN) is formed for this starting graph 10. Figure 2 shows a schematic representation of a Neural Network (NN) 20 comprising a plurality of layers 22, 24, 26 wherein layer 22 contains three NN nodes 28, 30, 32.

Figure two shows three layers wherein: layer 0 is labelled '22' in the figure; layer 1 is labelled '24' in the figure; layer 2 is labelled '26' in the figure. The NN may contain one or more layers after the initial layer 22. Each NN node is associated with a different one of the values of the feature vector 'h' for each of the feature vectors. Thus, graph node 0 in figure 1 has initial feature vector [1, 0, 0] such that NN node 28 has the value 1, NN node 30 has the value 0, NN node 32 has the value 0; whereas graph node 2 in figure 1 has initial feature vector [0, 1, 0] such that NN node 28 has the value 0, NN node 30 has the value 1, NN node 32 has the value 0. The whole GNN is generated by at least forward propagating, and preferably back propagating, each graph node 12 through a NN as described above where the feature vector values are each assigned to a different NN node of the initial layer 22.

The GCN is a GNN that uses message passing to get to the next stage or 'layer' of the neural network having the next iteration of features vectors. The first layer in the neural network 20 after the initial starting graph is represented by the following vectors:

$$h_0^1, h_1^1, h_2^1, h_3^1$$

The above four feature vectors are represented by the global feature vector $H^1$ for layer 1 (ref. 24 in figure 2). To determine the next global vector $H^1$ we apply a function $G^1$ to $H^0$ as follows in equation 2.

$$H^1 = G^1(H^0) = \sigma(\tilde{A} H^0 W^1)$$

[Equ. 2]

In equation 2, $\sigma$ is the sigmoid activation function for the neural network, $W^1$ is a weights matrix containing weights for progressing the neural network from layer 0 (ref. 22) to layer 1 (ref. 24) which is schematically depicted in figure 2, $\tilde{A}$ is an aggregation matrix represented in this example by a normalised adjacency matrix. Equation 2 describes the GNN process of:

a) message passing by multiplying the $H^0$ matrix with the $W^1$ weights matrix;
b) aggregating the results of the message passing by multiplying the resulting matrix in step a) with the aggregation matrix $\tilde{A}$;
c) applying the neural network activation function $\sigma$ to the result of b), above.

Each of the steps a)-c) above may be modified or re-ordered. It should be understood that the matrix multiplication approach given in equation 2 provides an efficient form of calculating $G^1(H°)$, however the process may be accomplished in a piecemeal manner by calculating each of the steps a)-c) above in turn, and/or not using matrices. Furthermore, each of the feature vectors may be multiplied by their respective weights in a separate multiplication step to the other feature vectors.

In this example the weights matrix $W^1$ is as follows in equation 3, although any weights matrix may be used in principle:

$$W^1 = \begin{bmatrix} 2 & 3 & 1 & 2 \\ 1 & 4 & 0 & 8 \\ 0 & 5 & 0 & 2 \end{bmatrix}$$

[Equ. 3]

The product of the weights matrix $W^1$ and the Global feature vector $H^0$, using the feature vectors of figure 1, is:

$$H^0 W^1 = \begin{bmatrix} 2 & 3 & 1 & 2 \\ 2 & 3 & 1 & 2 \\ 1 & 4 & 0 & 8 \\ 0 & 5 & 0 & 2 \end{bmatrix}$$

[Equ. 4]

Each row of equation 4, from top to bottom, represents intermediate updated feature vectors for, respectively $h_0$, $h_1$, $h_2$, $h_3$. The intermediate feature vector has an increased size compared to the initial feature vectors, for example: in equation 1, the feature vector for $h_0$ is the top line of the matrix which has three values of 1, 0, 0; whereas in equation 4 the intermediate feature vector for $h_0$ is also the top line which has four values of 2, 3, 1, 2.

The aggregation step in this example calculates, for each node, the sum of the nodes own intermediate features with the features of its immediate connected neighbours. The normalised adjacency matrix Ã represents this function. The normalised adjacency matrix Ã may be derived from the starting adjacency matrix A that defines the connections in the initial graph 10. In this example, the adjacency matrix A is represented by equation 5.

$$A = \begin{bmatrix} 0 & 1 & 1 & 0 \\ 1 & 0 & 1 & 0 \\ 1 & 1 & 0 & 1 \\ 0 & 0 & 1 & 0 \end{bmatrix}$$

[Equ. 5]

In the aggregation step in this example the process is aggregating not just the feature vector data of a particular node's neighbours, but also the feature vector data of the node itself. Thus, the aggregation process adapts the adjacency matrix to include its identity 'Id' as shown in equation 6.

$$(A + Id) = \begin{bmatrix} 1 & 1 & 1 & 0 \\ 1 & 1 & 1 & 0 \\ 1 & 1 & 1 & 1 \\ 0 & 0 & 1 & 1 \end{bmatrix}$$

[Equ. 6]

When using matrices to calculate the feature vectors, the aggregation function needs to be symmetric wherein each value in the matrix sums to one. In this example, a further matrix 'D' is used wherein 'D' is defined as in equation 7 as:

$$D = \begin{bmatrix} \dfrac{1}{\sqrt{3}} & 0 & 0 & 0 \\ 0 & \dfrac{1}{\sqrt{3}} & 0 & 0 \\ 0 & 0 & \dfrac{1}{\sqrt{4}} & 0 \\ 0 & 0 & 0 & \dfrac{1}{\sqrt{2}} \end{bmatrix}$$

[Equ. 7]

In equation 7, the value being subject to the square root is the number of node connections a node has, plus itself. Thus, the top left value in equation 7, being subject to an inverse square root, has the number '3' because node 0 has two connecting nodes, plus itself.

The normalised adjacency matrix Ã is therefore defined by equation 8 as:

$$\tilde{A} = D(A + Id)D$$

[Equ. 8]

The calculation of what the next set of feature vectors 'h' is for each node in the next layer in the neural network may be represented in non-matrix form in equation 9.

$$h_u = \left( \frac{1}{N_{(v)} + 1} \right) \left[ \left( \sum_{v} \tilde{h}_v \right)_{v \sim u} + \tilde{h}_v \right]$$

[Equ. 9]

The first bracketed term in equation 9 is a normalisation factor, related to the normalised adjacency matrix Ã, wherein N is the number of neighbouring nodes for node v.

The $H^1$ node vectors calculated by equation 2 for the first layer 24 (i.e., layer 1) become the input vectors to calculate the feature vectors of the next layer 26 (second layer). The progression from the first layer 24 to the second layer 26 will use an equation similar to that of equation 2 wherein $G^2$ is different to $G^1$ at least insofar that there will be a different Weights matrix $W^2$ and, optionally, a different NN activation function. The updating of the node feature vectors via effectively collecting data from adjacent nodes and selectively aggregating them may be referred to as 'message passing'. The GNN may be generated by incorporating forward and back propagation.

The above example describes an example of a GCN that the method and system may be applied to. Any of the steps and equations described above may be used with the examples of Quantum enhanced GNNs described herein. Another type of GNN that the method and system may be applied to is a Graph Attention Network (GAT).

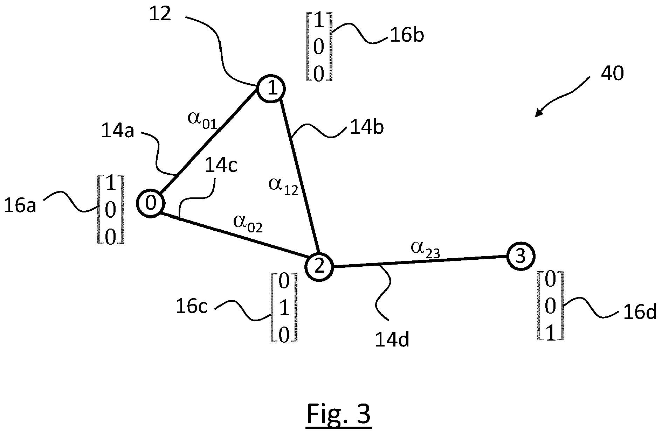

A GAT operates in a similar manner to a GCN, as described above, with some exceptions. There is now presented an example of a GAT using a similar initial graph as figure 1. The initial graph 40 in this example of a GAT is shown in figure 3. The graph 40 of figure 3 has referenced items similar to that of figure 1 wherein like references indicate like items. Each edge in the graph 40 has a weighting $\alpha_{ij}$ wherein subscript ij indicates the graph nodes the edge connects. Edge 14a connects nodes 0 and 1 and has an edge weighting $\alpha_{01}$. Edge 14b connects nodes 1 and 2 and has an edge weighting $\alpha_{12}$. Edge 14c connects nodes 0 and 2 and has an edge weighting $\alpha_{02}$. Edge 14d connects nodes 2 and 3 and has an edge weighting $\alpha_{23}$.

In the GNN aggregation step, node 1 is aggregated by the following equation 10:

$$h_1^1 = \alpha_{01} h_0^0 + \alpha_{12} h_2^0 \qquad \text{[Equ. 10]}$$

The set of $\alpha_{ij}$ values in the whole graph is a matrix $\mathbf{[A]_{ij}}$. This vector replaces the normalised adjacency matrix $\tilde{A}$ in equation 2.

Each weighting $\alpha_{ij}$ is linked to a vector 'v' that is learnt as the method goes through its forward and back propagation steps. The relationship between $\alpha_{ij}$ and vector 'v' is exemplified in equation 11 with $\alpha_{01}$.

$$\alpha_{01} = V^T(h_0^1||h_1^1)$$

[Equ. 11]

V is a column vector. $V^T$ is the transpose of the column vector to a row vector. The term '$h_0^1 \| h_1^1$' denotes the two 'h' vectors edge-joined such that $h_0^1$ is on top of $h_1^1$ to form a single column vector. In this example, vector V has a length equal to the length of '$h_0^1 \| h_1^1$', thus entailing the scalar product in equation 11 provides a single value $\alpha_{01}$.

The method may not be limited to a single vector V to represent the weighting $\alpha_{ij}$ of an edge between two nodes. Instead, the method may use a plurality of vectors V to represent the weighting of the connections between the graph nodes 12. In such examples there are therefore a plurality 'Z' of vectors $\mathbf{[A]_{ij}^z}$ because each $\mathbf{[A]_{ij}}$ has all the $\alpha_{ij}$ values, however there are multiple versions of $\alpha_{ij}$ due to the multiple vectors V for each $\alpha_{ij}$ For example, $\alpha_{01}$, for $\mathbf{A^1}$, = 0.5 whilst $\alpha_{01}$, for $\mathbf{A^2}$, = 0.75. Thus, for example, for three vectors 'v' associated with each edge weighting $\alpha_{ij}$, there exists three functions '$g_i^1$' that operate on $H^0$, wherein i=0, 1, 2 such that $H^1$ is defined by equations 12 and 13 as follows.

$$g_i^1(H^0) = \sigma(\mathbf{A}H^0W^1)$$

[Equ. 12]

$$H^1 = G^1(H^0) = g_0^1(H^0)||g_2^1(H^0)|| g_2^1(H^0)$$

[Equ. 13]

The same process for spreading the weights over multiple optimisable vectors may also be applied to the Weights matrix W, in a similar manner. As such, the function for a particular layer may be a concatenation of different versions of weights W (in different weights matrices) and edge weights $\alpha_{ij}$ in a different matrix $\mathbf{[A]_{ij}}$. The matrix $\mathbf{[A]_{ij}}$ and the matrix W form the 'HEAD' as defined in equation 14.

$$HEAD_h = (\mathbf{A_h}H^0W_h)$$

[Equ. 14]

Ignoring the activation function, the matrix representing all head variations is provided by equation 15.

$$HEAD = HEAD_1||HEAD_2|| HEAD_3$$

[Equ. 15]

It should be noted that, even though the above example is described in reference to GATs, in other embodiments, the method could also be applied to other architectures, such as Graph Transformers, which are a broader family of models.

The background section above describes prior GNN's to be subject to degrees of solution inaccuracy and, in some cases, failure to provide a solution. One example of a problem with classical message passing GNNs using classical computers (as opposed to quantum computers) is that they are unable to differentiate between two (or more) cover graphs having the same number of nodes and same total number of edges (but different edge connections). The indistinguishability of these cover graphs relates to the Weisfeiler-Leman (WL) test. The WL test is a heuristic that when applied to two graphs can nominally distinguish between two graphs. If, from running the WL heuristic for each graph, the values are different, then you know the graphs are different; however, if the values from running the WL heuristic are the same then the WL test tells you nothing about the graphs in so far that the graphs may be different or the same.

Cover graphs may fail the WL test in that the result will be equal. Because of this, classical GNNs have a limited applicability for problems needing to distinguish between two cover graphs. This is further discussed in "A topological Characterisation of Weisfeiler-Leman equivalence classes" by J. Bamberger: arXiv:2206.11876v1 [cs.LG] 23 Jun 2022, the entire contents are herein incorporated by reference.

The present application provides for using a quantum computer to implement at least part of the aggregation processes in training a GNN. For example, determining the normalised adjacency matrix $\tilde{A}$ of a GCN or a matrix of $\alpha_{ij}$ such as $[A]_{ij}^z$ for a GAT. The use of a quantum computer in this manner allows such quantum enhanced GNNs to distinguish between graphs that would nominally fail the WL test. Furthermore, such quantum enhanced GNNs may generally present more accurate solutions than classical GNNs. Such quantum enhanced GNNs also present an alternative way to generate a GNN.

More generally, the methods disclosed herein may provide additional benefits, such as increasing the speed of computation, and/or increasing the speed of computation, and/or reducing energy usage for the computation.

Examples above have performed the method with node features. In an alternative embodiment the method and system could be applied on edge features in addition to or in the alternative to node features. Thus the method may use quantum enhancement to aggregate vector features of nodes and/or edges.

Edge features can be defined in the same way as node features. However, if we define node features for a graph, there may exist a corresponding graph (a dual graph) for which the nodes are the edges of the original graph, and the edges are nodes of the original graph. So, applying the method and system for edges features of a given graph may be equivalent to applying the method on the node edges of the dual graph of that graph.

Thus, there may be further presented a method for generating a Graph Neural Network, GNN, wherein:

    i) the GNN comprises a plurality of layers wherein:

        one of the said layers is a first layer; the first layer being the initial layer or a hidden layer in the GNN; and,

        another one of the said layers is a second layer; the second layer being subsequent to the first layer;

    ii) the GNN being associated with a graph comprising a plurality of graph nodes and edges;

    iii) for the first layer:

        A) at least a first graph node of the plurality of graph nodes is represented by a first set of one or more first node features; or,

        B) at least a first graph edge of the plurality of graph edges is represented by a first set of one or more first edge features;
        and,

        C) at least a second graph node of the plurality of graph nodes is represented by a first set of one or more second node features; the first graph node being connected to the second graph node by one of the edges; or,

        D) at least a second graph edge of the plurality of graph edges is represented by a first set of one or more second edge features; the first graph edge being connected to the second graph edge by one of the nodes;

the method comprising:

    I) generating, for the second layer, a second set of one or more first node (or edge) features by:

        a) inputting electromagnetic, EM, radiation to at least a first qubit and a second qubit of a quantum computer; the first graph node, or first graph edge, represented by at least the first qubit; the second graph node, or second graph edge, represented by at least the second qubit; the EM radiation interacting the first qubit with the second qubit;

        b) measuring the quantum states of the first and second qubits after the start of the inputting of the EM radiation;

        c) determining an aggregation factor from the measured quantum states;
        and,

d) using the aggregation factor and:

the first set of one or more second node features; or

the first set of one or more second edge features;

to generate the second set of one or more features for the:

first graph node for the second layer; or

first edge node for the second layer; or
and,

II) generating the GNN at least based upon the generated second set of one or more first node or edge features.

The above alternative may be adapted to include any further feature or modification as presented herein for the first and second aspects.

There now follows an example wherein a quantum computer is used to enhance the generation of a GNN by determining values used for the aggregation steps. These aggregation values may be termed aggregation factors. In principle quantum enhancement may be used for just a portion of the generation of the GNN, for example aggregating for one node in one layer for just one forward propagation pass, however the method and system preferably use quantum enhancement for any one or more of: multiple nodes, more preferably all nodes; multiple edges, more preferably all edges multiple layers; multiple passes; all layers; all passes.

In this example the GNN is a GAT, although other GNNs may use such quantum enhancement. The quantum computer used to enhance the generating of the GNN may be one or more quantum computers. Any of the one or more quantum computers may include any one or more of, but not limited to: a Neutral atom quantum computer running in an analogue mode of operation; a Neutral atom quantum computer running in a gate-mode of operation; a quantum annealer; a photonic quantum computer; a superconducting quantum computer wherein qubits are implemented by Josephson junctions; a trapped ion quantum computer wherein qubits are implemented by the internal state of trapped ions; a spin-based quantum dot computer. Other quantum computers may also be used.

In the following example an analogue neutral atom quantum computer is used. Details of such a quantum computer are presented elsewhere herein, providing optional sets of hardware, and running parameters, however it is to be appreciated that other types of neutral atom quantum computer equipment may be used. For purposes of this discussion the analogue Neutral Atom Quantum computer shall just be referred to as the Quantum Computer or 'QC' for sake of brevity.

In this example of the methods and systems of a quantum enhanced GNN, we are referring back to the GAT example above wherein the GNN training process is aiming to determine the weightings $\alpha_{ij}$ that are linked to vector 'v' via equation 11. The QC is used to determine weightings $\alpha_{ij}$ at each layer of the GAT.

In summary, the atoms (i.e., those spatially isolated atoms in a chamber) in the QC represent nodes in the graph. On the first forward propagation of the GNN generation, for each GNN level, the method arbitrarily chooses the characteristics of the input EM radiation incident upon a newly formed register of atoms of the QC. Atom registers and the operation of the QC, for this example, are discussed elsewhere herein. On further iterations of the GNN generation, potentially after any backpropagation steps, the EM radiation is adapted based on the evaluation of the output of the previous forward propagation of the GNN. This evaluation may compare the output of the GNN to training data which in turn may result in a loss parameter or loss function. The parameters of the EM radiation used in the next set of forward propagation steps of the GNN generation is at least partially derived from the abovesaid evaluation.

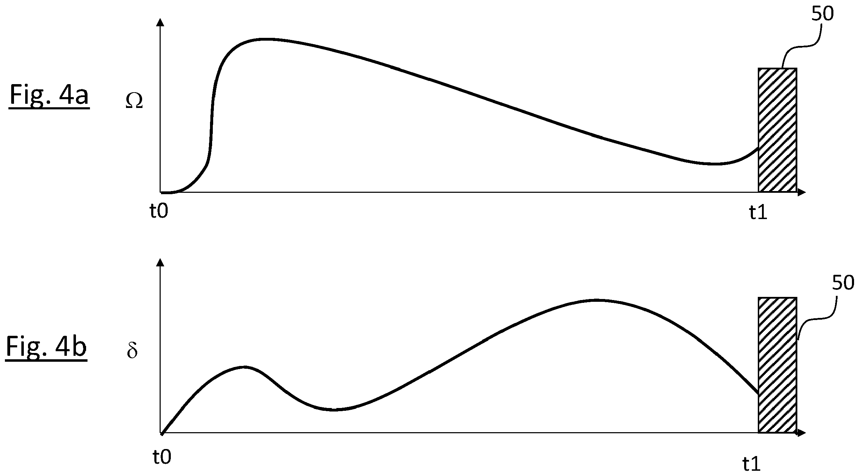

The EM radiation described above is the EM radiation driving the atoms into different atomic states. The EM radiation typically being characterised by at least the following properties: Rabi frequency $\Omega$ and a detuning $\delta$. The EM radiation may be characterised by alternative and/or additional different properties. Typically, the incident EM radiation has a start time 't0' and a stop time 't1' wherein t1 is the time that the EM radiation is input into the QC atoms and t1 is the time the EM radiation ceases to be input to the atoms. Between t0 and t1 the EM radiation may have one or more profiles that may be time-varying. The profiles may vary in a parameter characterising the EM radiation. These profiles are preferably, at least, a time-varying Rabi frequency $\Omega$ profile as exemplified in figure 4a, and a time varying detuning $\delta$ profile as shown in figure 4b. It is to be noted that such profiles may not be varying in time for at least a portion of time T, for example a profile may have time-varying or constant-level profiles portions. Immediately, or almost immediately, after the EM radiation stops being incident upon the atoms in the QC at t1, there is a measurement period 50 wherein the states of each atom in the register are observed. The QC is observed to identify which qubits (i.e., atoms) are fluorescing or not, which in turn indicates which qubits are in the different final qubit states. The qubit states represent the final state of the QC system after a time evolution given by the Hamiltonian. This Hamiltonian may be based off an Ising Hamiltonian or another Hamiltonian such as an XY Hamiltonian, however in this example the Hamiltonian is an XY Hamiltonian representing the energy state of a quantum system wherein the energy states of rubidium neutral atoms are two dipole-coupled Rydberg states. Such a Hamiltonian is described elsewhere herein. The method can derive what $\alpha_{ij}$ is for nodes 'i' and 'j' by looking at the final states of the atoms.

To determine what $\alpha_{ij}$ is, it is preferred that multiple 'runs' of the same initial atom register set-up and EM profile are used on the QC. This may be done on the same or a different QC. For each 'run', at least one of six 'observables' is determined. The determination of the 'observables' is used, in turn, to determine $\alpha_{ij}$. Each observable is a product of a Pauli spin matrix operator for one atom in the register and a Pauli spin matrix operator for another atom in the register.

The observables $O_{ij}$ are as listed below:

$z_i\,z_j$

$x_i\,z_j$

$y_i\,x_j$

$y_i\,y_j$

$x_i\,x_j$

$y_i\,z_j$

wherein the Pauli spin matrix operators are defined by equations 16a-c as follows:

$$x = \begin{pmatrix} 0 & 1 \\ 1 & 0 \end{pmatrix}$$

[Equ. 16a]

$$y = \begin{pmatrix} 0 & -i \\ i & 0 \end{pmatrix}$$

[Equ. 16b]

$$z = \begin{pmatrix} 1 & 0 \\ 0 & -1 \end{pmatrix}$$

[Equ. 16c]

Wherein 'i' in equation 16b is denoting the imaginary unit.

Other observables may be used.

The $\alpha_{ij}$ component relates to the final state $\psi$ of the quantum system after the time evolution by the Hamiltonian as set out in equation 17.

$$\alpha_{ij} = \langle \psi | O_{ij} | \psi \rangle$$

[Equ. 17]

To exemplify this process, we discuss an example of a 4-node graph wherein the QC has a 4-atom register. An initial arbitrary time-varying EM radiation profile is determined and is run on the QC six times. On each run the register is reset with the atoms held in the same spatial positions relative to each other. The same EM profile is input on each 'run' and after time t1, the atoms are measured to determine their final energy state after the EM radiation has stopped being input into the system.

Table 1 below show the state of each qubit derived from measuring the degree of fluorescence of each atom.

Table 1

|  | QUBITS (Nodes) | | | |
|---|---|---|---|---|
| **RUN** | **3** | **2** | **1** | **0** |
| R1 | 1 | 0 | 1 | 0 |
| R2 | 1 | 1 | 1 | 0 |
| R3 | 1 | 0 | 0 | 0 |
| R4 | 0 | 0 | 0 | 1 |
| R5 | 1 | 1 | 0 | 0 |
| R6 | 1 | 0 | 1 | 1 |

We now calculate $\alpha_{ij}$ for nodes 1 and 2, just using $z_i z_j$ as the observable only, hence calculating $\alpha_{01}$ using observable $z_0 z_1$. To do this we calculate, for each run, what the values of $z_0$ and $z_1$ are using table 1 and the Pauli operator in equation 16c. Then we multiply the determined value of $z_0$ with the determined value of $z_1$, for each run to get $z_0 z_1$ for that run. We then add each of the totalled run values together and divide by the total number of runs to a get an average of $z_0 z_1$ for the whole series of six runs. It is to be appreciated that there may be one or more runs, and more than six runs and that other ways of averaging $z_0 z_1$ may be used. In some alternative implementations, averaging may not be used.

For run 1 (R1): $z_0$=1 because the '0' qubit in table 1 is '0'; $z_1$= -1 because the '1' qubit in table 1 is '1'. $z_0 z_1$ for R1 is therefore -1.

For run 2 (R2): $z_0$=1 because the '0' qubit in table 1 is '0'; $z_1$= -1 because the '1' qubit in table 1 is '1'. $z_0 z_1$ for R2 is therefore -1.

For run 3 (R3): $z_0$=1 because the '0' qubit in table 1 is '0'; $z_1$= 1 because the '1' qubit in table 1 is '0'. $z_0 z_1$ for R3 is therefore 1.

For run 4 (R4): $z_0$= -1 because the '0' qubit in table 1 is '1'; $z_1$= 1 because the '1' qubit in table 1 is '0'. $z_0 z_1$ for R4 is therefore -1.

For run 5 (R5): $z_0$= 1 because the '0' qubit in table 1 is '0'; $z_1$= 1 because the '1' qubit in table 1 is '0'. $z_0 z_1$ for R5 is therefore 1.

For run 6 (R6): $z_0$= -1 because the '0' qubit in table 1 is '1'; $z_1$= -1 because the '1' qubit in table 1 is '1'. $z_0 z_1$ for R6 is therefore 1.

Totalling $z_0 z_1$ for R1 to R6 = (-1) + (-1) + (1) + (-1) + (1) + (1) = 0. The total of 0 divided by the value of 6 (for 6 runs) is = 0. Thus $< z_0 z_1 > = 0$ in this example.

If $\alpha_{01}$ were just calculated from this observable $z_0 z_1$ then $\alpha_{01}$ would be 0. However, $\alpha_{ij}$ may be determined from a plurality, preferably all, of the listed observables above. Thus, in this example of six runs $\alpha_{01}$ may be determine from equation 18a.

$$\alpha_{01} = \frac{z_0 z_1 + x_0 z_1 + y_0 x_1 + y_0 y_1 + x_0 x_1 + y_0 z_1}{6}$$

[Equ. 18a]

Other ways of determining $\alpha_{01}$ or otherwise generally $\alpha_{ij}$, may be used including any one or more of: fewer or more observables; different ways of averaging such as median averaging; fewer or more runs; adding weights $\gamma_n$ to the observables such equation 18b wherein the NN learns what values of $\gamma_n$ are required for a more optimal GNN solution.

$$\alpha_{01} = \frac{\gamma_1 z_0 z_1 + \gamma_2 x_0 z_1 + \gamma_3 y_0 x_1 + \gamma_4 y_0 y_1 + \gamma_5 x_0 x_1 + \gamma_6 y_0 z_1}{6}$$

[Equ. 18b]

The above calculation is just shown for $\alpha_{01}$ however the other values of $\alpha_{ij}$, relevant for the graph edges, would be calculated similarly including, for example $\alpha_{02}$ which would use the run values of the qubit '2' and qubit '0' columns in table 1. For example, for the graph 40 in figure 3, the following $\alpha_{ij}$ values would be calculated for going between layer 22 and 24 in figure 2: $\alpha_{01}$; $\alpha_{02}$; $\alpha_{12}$; $\alpha_{23}$. Thus, the calculated values of $\alpha_{ij}$ would be used in equation 10 to calculate the aggregated node value of node 1 for the next layer 1, and similarly (using a similar equation to equation 10) for the other nodes. For example, for node 2 is aggregated by the following equation:

$$h_2^1 = \alpha_{02}h_0^0 + \alpha_{12}h_1^0 + \alpha_{23}h_3^0$$

[Equ. 19]

The GNN generation process then proceeds as described above using a classical computer wherein each time new $\alpha_{ij}$ values are required to perform the aggregation function, the method uses a quantum computer. For example, to calculate the aggregations for the nodes 0-3 of graph 40 of figure 3 in the next layer (layer 2), further $\alpha_{ij}$ values are generated using the above quantum computing process so that, for example, the $\alpha_{ij}$ values are generated for equation 20.

$$h_2^2 = \alpha_{02}h_0^1 + \alpha_{12}h_1^1 + \alpha_{23}h_3^1$$

[Equ. 20]

The quantum enhancement may also be used to create multiple heads as described above.

In the first forward propagation processes from the initial layer to the end layer on the GNN training, each set of $\alpha_{ij}$ is calculated using an initial random (arbitrary) EM profile for each layer. However, after comparing to training data and back propagation through the GNN, the EM profiles for subsequent $\alpha_{ij}$ calculations may not be arbitrary but may be based off the immediately previous, or a previous, EM radiation profile. In some situations completely new, arbitrary, EM profiles are selected for further subsequent forward propagation steps Examples of a further EM profile for a further forward propagation may be any of, but not limited to: using a different detuning profile, using a different Rabi frequency profile; adapting any EM profile by keeping some data profile points but changing others, changing the gradient of a slope within the EM profile; changing the start and end EM profile points (at t0 and t1 respectively), changing the time duration 'T' between t0 and t1. Various different methods may be used to determine new values of the EM radiation for further forward propagations including, but not limited to: computing gradients parameter (shift rule); gradients free optimisation for $\delta$, $\Omega$, and T.

The above-described method and system for the example shown in figures 1-3, as described above, for the worked GAT example using an analogue neutral atom QC may be adapted in any way including, but not limited to, any one or more of: not including features, steps or configurations; adding further including features, steps or configurations; rearranging the position or order of features or steps; changing configurations. The adaption of the above example may be via including features steps or configurations of other examples described herein.

Generalised description

The above detailed example is just one way of enacting the method and systems of quantum enhancing a GNN.

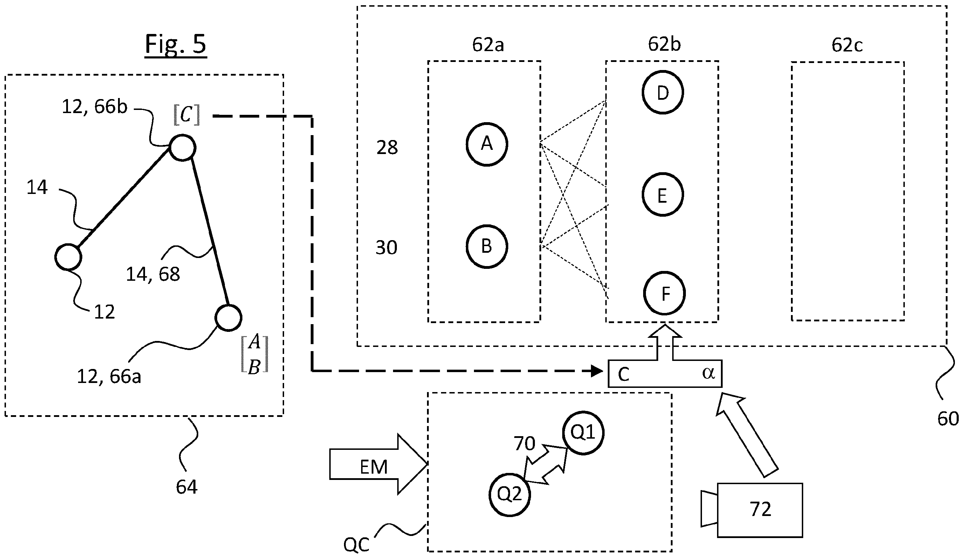

In general, the method is for generating a Graph Neural Network, GNN 60. Figure 5 shows a simple schematic example of the method. The GNN 60 may comprise a plurality of layers 62a, 62b, 62c. One of the said layers is a first layer 62a. Another one of the said layers is a second layer 62b. The second layer 62b is subsequent to the first layer. The first layer may be the initial layer or a hidden layer in the GNN 60. The GNN 60 is associated with a graph 64 comprising a plurality of graph nodes 12 and edges 14. For the first layer 62a, at least a first graph node 66a of the plurality of graph nodes 12 is represented by a first set of two or more first node features, [A, B]. Further, for the first layer 62a, at least a second graph node 66b of the plurality of graph nodes 12 is represented by a first set of one or more second node features [C]; the first graph node 66a node being connected to the second graph node 66b by one of the edges 68. The node features may be any numerical data or information such as, but not limited to, data values.

There is also presented a system for generating a Graph Neural Network, GNN. The system may use a (classical) non-quantum computer processor to, at least: generate the second set of node features and generate the GNN based at least upon the said node features. The computer processor may further perform any one or more of, but not limited to, the following functions: determining and outputting electrical signals to drive an EM source to output EM radiation; controlling the operation of the quantum computer; receiving measured quantum states; determining the aggregation factor; other calculations and apparatus control functions described herein.

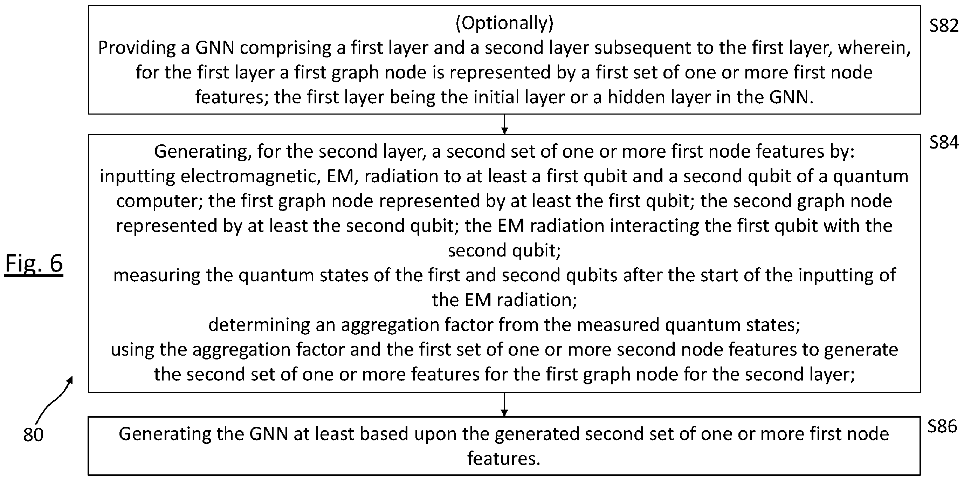

Figure 6 shows a flow chart of at least some of the steps of the method 80 wherein the method steps in figure 6 may be adapted to include further features as described herein including any one or more of the steps underneath. In some examples the method 80 may comprise providing the above GNN input framework and graph data, for example the method 80 may optionally comprise a step S82 of providing a GNN comprising a first layer and a second layer subsequent to the first layer, wherein, for the first layer a first graph node is represented by a first set of one or more first node features; the first layer being the initial layer or a hidden layer in the GNN. The step S82 is optional because the step may already be provided or may be provided by a different entity than the entity performing steps S84 and S86 below.

Referring to figures 5 and 6, the method comprises the step S84 of generating, for the second layer 62b, a second set [D, E, F] of one or more first node features. This may be done by inputting electromagnetic, EM, radiation to at least a first qubit Q1 and a second qubit Q2 of a quantum computer, QC. The first qubit Q1 represents the first graph node 66a. The second qubit Q2 represents the second graph node 66b. The EM radiation is operative to interact 70 the first qubit Q1 with the second qubit Q2. The method may be adapted such that a graph node may be represented by a plurality of qubits.

The method may then measure (for example with a fluorescence monitoring camera 72) the quantum states (for example an atomic state of a quantum computer) of the first qubit Q1 and second qubit Q2 after the start of the inputting of the EM radiation and determining an aggregation factor (for example a weighting factor $\alpha$) from the measured quantum states. The aggregation factor and the first set of one or more second node features [C] are then used to generate the second set [D, E, F] of one or more features for the first graph node 66a for the second layer 62b. The GNN 60 is then generated S86 at least based upon the generated second set [D, E, F] of one or more first node features.

Some or all of the steps above of the general method may optionally be enacted by, or caused to happen by the direct actions of, a user, for example any one or more of: inputting the EM radiation; measuring the atomic states of the qubits; determining the weighting, generating the second set of; conducting further training of the GNN; other steps as detailed in this application. Any one or more of the abovementioned steps may be enacted by, or caused to happen by the direct actions of, a classical computer. As such one or more processors may be used, at least in some part, to perform the abovesaid actions. In some implementations of the above method a processor and a user may perform the abovementioned steps either conjointly or by dividing the performance of the steps between the two. The above method may be a computer implemented method. The above method may also be enacted by a system comprising one or more classical computer processors having, or having access to, one or more memory devices having electronically readable instructions for giving effect to the above-described method.

A GNN layer typically encodes the information on the structure of the graph. The GNN then typically exploits this information to update the initial representation of nodes and edges. The second layer may be subsequent to the first layer by being a later processed layer when forward propagating through the GNN wherein the subsequent second layer may be either directly after the first layer or separated by one or more other intermediate hidden layers of the GNN. Preferably the second layer is the layer immediately after the first layer. The first layer may be the initial (or input) layer of the GNN or a hidden layer. The second layer may be a hidden layer or the output layer of the GNN. The GNN typically comprising at least three layers wherein: one layer is the input layer, one layer is the output layer, there exists at least one a further layer between the input layer and output layer.

The use of the quantum computer described above shall be herein referred to, for simplicity reasons, as 'quantum enhancement'. Preferably, the node features are numerical values however discussions herein to 'node values' may be equally applicable to other node features. The training of the GNN may use quantum enhancement for the generation of node values for one or more nodes in one or more layers. For example: quantum enhancement may only be used to determine node values for a single graph node on a single layer after the initial layer; quantum enhancement may be used to determine node values for a single graph node on multiple layers after the initial layer; quantum enhancement may be used to determine node values for multiple graph nodes on a single layer after the initial layer; quantum enhancement may be used to determine node values for multiple graph nodes on a multiple layers after the initial layer. Preferably, quantum enhancement may be used to determine node values for all graph nodes on all layers after the initial layer. The same considerations above may be applied where the method determines edge features.

The weighting factor may be the parameter $\alpha_{ij}$ as described elsewhere herein, an example of which is in equation 17. Other weighting factors may also be calculated in addition or in alternative to other weights, using quantum enhancement, including the weights $\gamma_n$ as described elsewhere herein, for example with reference to equation 18b.

Measuring the qubit states after the start of inputting the EM radiation may comprise: beginning the measurement after the EM radiation has stopped being input to the first and second qubits or beginning the measurement before the EM radiation has stopped being input to the first and second qubits, for example near the end of the duration of the EM radiation.

Optional variations to the GNN

Optional variations in the above example include any one or more of, but not limited to: the following.

The graph may comprise any of: two or more nodes; three or more nodes, four or more nodes; one or more edges; two or more edges, three or mode edges.

The nodes. The nodes in the graph may by homogeneous or heterogeneous. The node vectors may comprise one or any number of features.

The connecting edges between the graphs may be unidirectional, bidirectional, weighted, unweighted. The adjacency matrix 'A' may reflect these variations. The edges may be represented by edge vectors comprising one or more edge features.

The neural network activation function. The activation function may be any of, but not limited to: a linear or nonlinear function, Identity, Binary step, Logistic, sigmoid, Tanh, ArcTan, Rectified Linear Unit (ReLU), Parametric Rectified Linear Unit (PReLU), Exponential Linear Unit (ELU), SoftPlus.

The training of the GNN may include pooling. Pooling may take at least two different forms; and either is optionally applicable to the methods and systems described herein. In a first pooling method, a graph contains a cluster of nodes and other nodes outside the cluster that are connected to the cluster. The cluster of graph nodes have high numbers of edge connections between the nodes in the cluster such that each node in the cluster is edge connected to multiple other nodes in the same cluster. This cluster can be approximated to be a single node. The second method of pooling may include reducing the size of sample that a node in the GNN gets messages from. For example, if a graph node is edge connected to 500 other nodes, then pooling may provide for reducing the number of messages in the message passing such that only a sample (e.g., 50) of the available edge connected nodes are used to update the feature vector of the node for the next NN layer.

The GNN may provide for layer skipping and for other techniques for factoring in, for a particular node, feature vectors of other nodes more than one edge connection away.

Any of the GNN's may use back propagation.

As discussed elsewhere herein, the EM radiation inputted to the qubits may be adapted based on the evaluation of the output of current or previous forward propagation outputs of the GNN. This may be accomplished in different ways including any one or more of the following.

For any one or more, preferably each forward propagation through the layers, the same propagation may be done multiple times (with the same initial graph node features, weights and EM radiation profiles). Average results may be taken.

Optimization on W can be done iteratively with gradient based optimization methods not limited to: Gradient Descent, Gradient Descent with momentum, Stochastic Gradient Descent, Adam (Adaptative Momentum Estimation). For each data point, the gradient of W can be computed classically with backpropagation if one has the matrix A in memory.

In one other example, multiple such forward propagations may also be done but varying the weights 'W' (see equations 2 for example) for each forward propagation, but keeping $\tilde{A}$ (or the equivalent A in other examples such as equation 12) constant, hence keeping the EM radiation profile constant. Each plurality of forward propagations having the same EM profile being a set of propagations. The output results, for example loss function, of each forward propagation in the set (each having at least one different weight W between at least two NN nodes) are then compared to determine which weights W provide the optimum result (for example, which results minimised the loss function the most). These weights are then determined to be the optimum weights for the EM profile for that set. The EM profile may be characterised by at least one of: Rabi frequency $\Omega$ detuning $\delta$, time T that the EM pulse is incident upon the qubits.

A further EM profile is then selected by varying at least one of: Rabi frequency $\Omega$ detuning $\delta$, time T. A further set of one or more forward propagations (each with at least one different weight within the same set) is then determined and, in a similar manner to the first set above, a further set of weights for that set is determined to be the optimum weights for that particular EM profile. The weights chosen may be representative samples from the continuous spectrum of possible weight values.

The above generation of optimum weights may be done multiple times, preferably any of: 5 or more, 10 or more; 20 or more, 30 or more; 40 or more; 50 or more times. After the different optimum weights are determined for each EM profile, a statistical analysis may be used to determine an optimum EM profile for the next forward propagation where the $\tilde{A}$ (or the equivalent A) is changed. Bayesian statistical analysis may be used, as well as other analyses such as regression. At least one, preferably each variable of the EM profile variables ($\Omega$, $\delta$, T) may be analysed and optimised as a hyperparameter. The hyperparameter optimization may use any one or more of: a grid search, a parameter sweep, or a random search. Bayesian optimisation may be used wherein a probabilistic model is built of the function mapping from hyperparameter values to the objective evaluated on the validation set. Gradient based optimisation may additional or alternatively be used wherein the gradient with respect to hyperparameters is computed and then the hyperparameters are optimized using gradient descent.

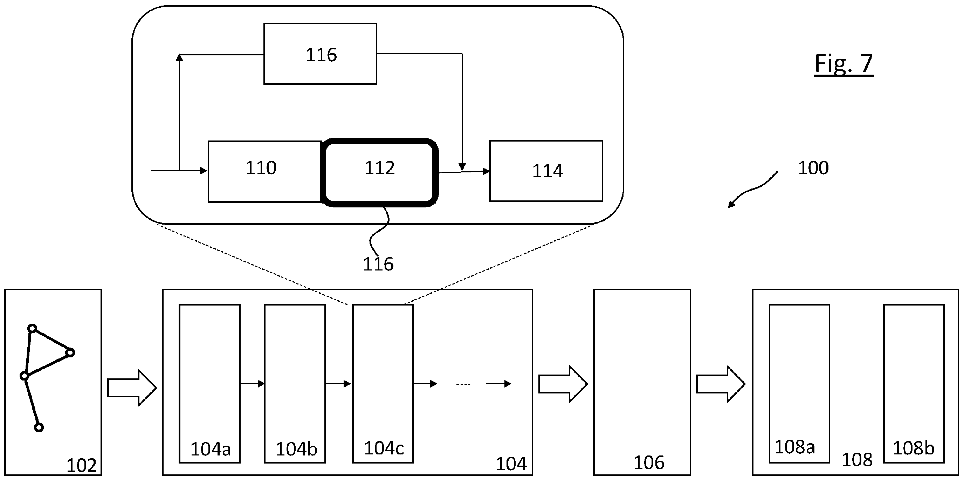

Figure 7 shows an example of a general design pipeline 100 for a GNN model that the Quantum enhancement may be applied to. Other GNN design pipelines may be used that are different to this example. Figure 7 has a similar structure to that described in: "Graph Neural network: A review of methods and applications" by Jie Zhou et al., AI Open 1; (2020) 57-81, the entire contents of which are incorporated herein by reference.

The pipeline 100 starts with an input 102 which has at least data about the graph. The next step in the pipeline 100 is the use of GNN layers 104. Figure 7 shows three such GNN layers 104a-c, however as few as one layer or multiple layers may be used. The pipeline 80 then proceeds to an output stage 106 which may performs tasks such as, but not limited to: node embedding, edge embedding, graph embedding. The next step in the pipeline is the loss function 108 which may involve using: A) setting the training to be any of (but not limited to) supervised, semi-supervised; unsupervised; B) data about the task 108b, such as specifying a node-level; or an edge-level; or a graph-level. For any one or more of the GNN layers 104, the design pipeline may use a sampling operator 110; a convolution or recurrent operator 112; and a pooling operator 114; and a skip connection 116. The quantum enhancement 116 may occur within the pipeline section 112. It is to be appreciated that the design pipeline may comprise further sections not listed above or shown in figure 7; and/or have some sections removed (or not utilised) from what is listed above and shown in figure 7. Furthermore, figure 7 shows arrows between different sections wherein the arrows show the flow of data when generating the GNN, however it is to be appreciated that other data flows may exist.

In one example, the design pipeline of a GNN model may be associated with one or more different applications and may contain at least four steps:

(1) find graph structure,

(2) specify graph type and, optionally, scale,

(3) design loss function and

(4) build model using computational modules, wherein the quantum enhancement is used in this step.

The steps typically occur in this order but may be determined in a different order or concurrently with each other. Steps (1) and (2) above may be associated with the input section 102 in figure 7. The design of the loss function in step (3) above may be associated with the section 108 in figure 7. The model building step (4) above may be associated with sections 104 and 106 in figure 7. Any of the sections or modules described herein for the generation of a GNN may be used with the methods and systems for quantum enhancing GNN's.

In more detail, for step (1) above, there may be a step of determining a scenario. The scenarios may be any of, but not limited to, structural scenarios and non-structural scenarios. In structural scenarios, the graph structure is explicit in the applications. For example: applications on molecules, physical systems, knowledge graphs. In non-structural scenarios, graphs are implicit so that we have to first build the graph from the task, such as building a fully-connected word graph for text or building a scene graph for an image.

In more detail, for step (2) above, there may be a step to determine the graph type and its scale.

Graphs with complex types may provide more information on nodes and their connections. Graphs may be categorized in different ways including, but not limited to any one or more of:

A) Directed/Undirected Graphs. Edges in directed graphs may be all directed from one node to another, which provide more information than undirected graphs. Each edge in undirected graphs can also be regarded as two directed edges.

B) Homogeneous/Heterogeneous Graphs. Nodes and edges in homogeneous graphs have same types, while nodes and edges have different types in heterogeneous graphs. Types for nodes and edges play important roles in heterogeneous graphs and should be further considered

C) Static/Dynamic Graphs. When input features or the topology of the graph vary with time, the graph is regarded as a dynamic graph. The time information should be carefully considered in dynamic graphs.

Other graph types may be hypergraphs and signed graphs.

The scale of the graph may be factor in the GNN design process

In one example, if the adjacency matrix or the graph Laplacian of a graph cannot be stored and processed by the device, then the graph may be considered as a large-scale graph which may entail that one or more sampling methods should be used.

In more detail, for step (3) above, the loss function may be based on a task type and a training setting. For graph learning tasks, there may be three kinds of tasks. Node-level tasks focus on nodes, which may include, but is not limited to include node classification, node regression, node clustering, etc. Node classification tries to categorize nodes into several classes, and node regression predicts a continuous value for each node. Node clustering aims to partition the nodes into several disjoint groups, where similar nodes should be in the same group.

Edge-level tasks are edge classification and link prediction, which require the model to classify edge types or predict whether there is an edge existing between two given nodes.

Graph-level tasks include graph classification, graph regression, and graph matching, all of which need the model to learn graph representations.

From the perspective of supervision, we can also categorize graph learning tasks into three different training settings:

Supervised setting provides labelled data for training.

Semi-supervised setting gives a small amount of labelled nodes and a large amount of unlabelled nodes for training. In the test phase, the transductive setting may require the model to predict the labels of the given unlabelled nodes, while the inductive setting provides new unlabelled nodes from the same distribution to infer.

Unsupervised setting only offers unlabelled data for the model to find patterns. Node clustering is a typical unsupervised learning task.

The task type and training setting allows for the determination of a loss function for the task.

In more detail, for step (4) above, different computational modules may be selected wherein at least a propagation module may involve the use of a quantum computer as discussed elsewhere herein.

The computational modules are typically embodied in computer hardware and/or software as exemplified elsewhere herein. The modules may include, but are not limited to:

A Propagation Module. The propagation module is used to propagate information between nodes so that the aggregated information could capture both feature and topological information. In propagation modules, the convolution operator and recurrent operator is implemented using quantum enhancement and aggregates information from neighbours. The skip connection operation is used to gather information from historical representations of nodes and mitigate the over-smoothing problem. In other examples, the function of the quantum enhancement may be included, generally, without the need of a specific 'propagation module' perse.

A Sampling Module. When graphs are large, sampling modules are usually needed to conduct propagation on graphs. The sampling module may be combined with the propagation module.

A Pooling Module. When we need the representations of high-level subgraphs or graphs, pooling modules are needed to extract information from nodes.

The GNN may, in some examples, be designed without requiring any one or more of: the pooling module and the sampling module.

With these computation modules, a typical GNN model may be built by combining them. A typical architecture of the GNN model is illustrated in the expanded view of layer 104c of figure 7 where the convolutional operator, recurrent operator, sampling module and skip connection are used to propagate information in the layer and then the pooling module is added to extract high-level information. The convolutional operator, recurrent operator, sampling module and skip connection may be used to propagate information in each of the layers 104.

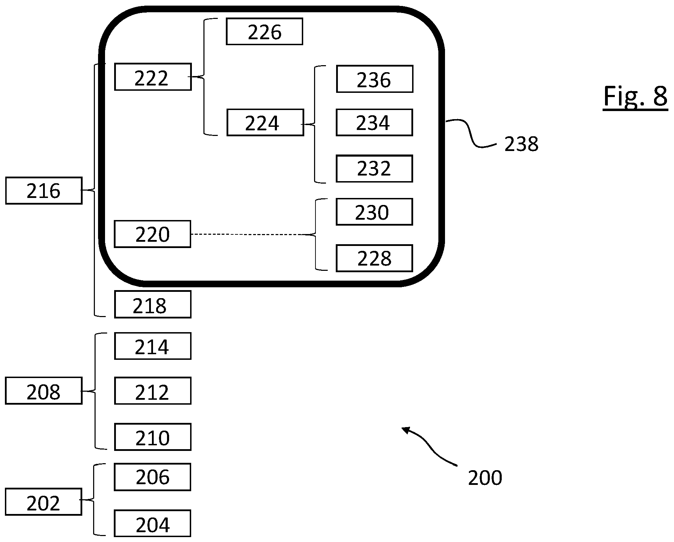

Figure 8 shows an example of some of the above computational modules 200.

The pooling module 202 may comprise submodules for:

a) Hierarchical pooling 204 which may include functionality for any one or more of, but not limited to: Coarsening, EEC, DiffPool, gPool, EigenPooling; SAGPool; and/or,

b) Direct pooling 206 which may include functionality for any one or more of but not limited to: Simple Pooling, Set2set; SortPooling.

The sampling module 208 may comprise submodules for:

c) Subgraph 120, which may include functionality for any one or more of, but not limited to: ClusterGCN; GraphSAINT.

d) Layer 212, which may include functionality for any one or more of, but not limited to: FastGCN; LADIES.

e) Node 214, which may include functionality for any one or more of, but not limited to: GraphSage; VR-GCN; PinSAGE.

The propagation module 216 may comprise submodules for:

f) skip connection 218, which may include functionality for any one or more of, but not limited to: JKN, Highway GCN, CLN, DeepGCN.

g) Quantum enhancement 238 via using a quantum computer as described elsewhere herein, wherein the normal recurrent operator or convolution operator is at least partially replaced using the quantum enhancement. The quantum enhancement via use of a quantum computer may be used instead of the following modules that would nominally be executed via a classical computer:

h) For the recurrent operator 220, submodules such as, but not limited to:

    I) Convergence operators 230, such as GNN, GraphSEN, SSE, LP-GNN;

    II) Gate operators 228, such as GGNN, Tree LSTM, Graph LSTM, sequence LSTM;

i) For the convolution operator 222, submodules such as, but not limited to:

    III) Spatial operators 224, such as:

        Basic operators 236 such as: Neural FPs; DCNN; Patchy-San; LGCN

        Attentional operators 234 such as: GAT, GAAN;

        Framework operators 232 such as: MoNet; MPNN, NLNN, GN

    IV) Spectral operators 226, such as: Spectral network; Chebnet; GCN; AGCN; DGCN; GWNN.

There now follows a further general description of how quantum enhancement may be used with GNNs according to the methods and systems presented herein. Features and configurations provided in the general description below may be used together with other examples presented herein. Examples provided below are not intended to be limiting and may be adapted to incorporate features of other examples described herein.

(GNNs) are neural networks adapted to graph structured data. An objective is typically to learn hidden representation of nodes, or node features, relatively to the structure of the graphs. A node feature is typically an embedding to the node in a latent Euclidean space. The position of the node features of a graph in the latent space may be indicators of the node properties within the graph. In the same reasoning, one can also learn edge features.

We will note a graph G, with a set of nodes $V$ and a set of edges E. Each node v can be associated to a vector of node features hv. The adjacency matrix of G is noted $A$. A GNN is a succession of layers similarly to all other neural network architectures, which are called GNN layers. Given input node features $h_0$, the output of a GNN composed of L layers is noted $h_L$ with:

$$h_l = \text{Layer}_l(h_{l-1}) \ \forall l \in [1,L]$$

In this section, we first mathematically describe Message Passing Neural Networks (NN's) that may be the framework comprising the majority of GNN models and we detail the example of Graph Convolutional Networks that are the simplest GNN models. Then we describe the GNN pipeline and finally we give a broad vision of the different GNN families.

Message Passing Neural Networks (MPNN) constitute a family of models which encompasses a majority of GNN modes. Each layer l is characterized by the learnable functions $M_l$ and $U_l$ which are respectively called the message function and the update function. The node feature $h^v_l$ at the layer 1+1 for the vertex v is computed from the node feature $h^v_{l+1}$ at the layer l and the message $m^v_{l+1}$ with the rule:

$$m^v_{l+1} = \sum_{w \in \mathcal{N}(v)} M_l(h^v_l, h^w_l, e^{vw})$$

$$h^v_{l+1} = U_l(h^v_l, m^v_{l+1})$$

[Equ.21, 22]

where *N(v)* is the set of neighbours of node v and e^vw is the corresponding edge feature (if any).

Graph Convolutional Networks (GCN) are the simplest MPNN models, and their mathematical formulation may be a basis for understanding any further development of MPNNs. In the framework of MPNNs, the GCN update rule may be described by:

$$m_{l+1}^v = \sum_{w \in \mathcal{N}(v)} \frac{h_l^w}{d_v}$$

$$h_{l+1}^v = \sigma(W_{l+1}(\frac{h_l^v}{d_v} + m_{l+1}^v))$$

[Equ. 23, 24]

where $d_v$ is the degree of node v, $W_{l+1}$ is a learnable weight matrix, and $\sigma$ is a non-linearity such as ReLU. The same rule can be expressed in a more compact way as a matrix product. Let $X_l$ be the matrix in which the rows are constituted of $h^{vT}_l$, A the adjacency matrix of the graph, and D the degree matrix, i.e. the diagonal matrix with the degrees of all the nodes. The update rule of GCNs can be rewritten as:

$$X_{l+1} = \sigma(D^{-1/2}AD^{-1/2}X_l W_{l+1})$$

[Equ. 25]

The rows of $D^{-1.2} AD^{-1/2} X_l$ represent the sum of the feature vector of the neighbours of each node normalized by the degree.

Optionally, in a more general case, for example for Graph Transformers, the message passing operations described in reference to equation 23 can be modified so that the sum $m^v_{l+1}$ for each node v is computed over a larger set of nodes in the graph, possibly over all the nodes of the graph (instead of only over the neighbours N(v) of node v).

As described above, and shown in figure 7, a GNN pipeline may comprise several main steps. These steps may optionally include, but are not limited to:

1) Building the graph structure from the raw data: has the data under study an underlying graph structure or is it required to build a matching graph (scene graph for an image for instance)

2) Graph type and scale: directed/undirected, homogeneous/heterogeneous, static/dynamic, large scale,

3) Loss function: which may be based on any one or more of:

- the task: graph, node or edge classification
- the training setting: supervised, unsupervised and semi-supervised (small amount of labelled nodes and large number of unlabelled ones for training). Semi-supervised settings can have a transductive test phase (predicting labels for unlabelled nodes of the same graph) or inductive (predicting labels on new nodes from the same distribution)

4) Model: build a model by stacking layers made of computational modules:

- Propagation module: to propagate information between nodes (convolution operator, recurrent operator, skip connection). This is where the quantum enhancement applies as described herein.
- Sampling module: for large graphs
- Pooling module: to extract information from higher-level subgraphs.

The method and system for quantum enhancing GNN's presented herein may apply to the propagation module as exemplified by the reference 116 in figure 7 and described elsewhere herein.

Using the above-mentioned typology of modules, the GNN may be built by a landscape of GNN models as illustrated in figure 8 and described elsewhere herein. The method and systems for quantum enhancing GNNs may applies in the propagation module of the GNN model, except in the skip connection part. Every model in reference part 238 of figure 8 could be then quantum enhanced.

The methods and systems described herein may provide for quantum enhanced message passing. The idea of Quantum Enhanced Message Passing is to enhance the update rule with elements of quantum computing. One example will be detailed in the section below.

GNN Quantum layer. In equation 25, the graph structure is present when aggregating the feature vectors of the neighbours of each node. The method and system may have a new rule such as:

$$X_{l+1} = \sigma(A(\theta)X_l W)$$

[Equ. 26]

where $A(\theta)$ is a matrix of the same shape as the adjacency matrix, and is computed on a quantum processing unit. It is parameterized by a vector of parameters $\theta$ which can also be trainable. $A(\theta)$ can be referred to as a quantum weight matrix.

We will now develop how to compute the quantum weight matrix. We introduce two Hamiltonian operators. The first one is a 'graph' Hamiltonian noted HG whose topology of interaction is the same one as the graph. Examples of such Hamiltonians are the Ising Hamiltonian:

$$\sum_{(i,j)\in\mathcal{E}} \sigma_i^z \sigma_j^z$$

[Equ. 27]

or the or the XY Hamiltonian:

$$\sum_{(i,j)\in\mathcal{E}} \sigma_i^x \sigma_i^y + \sigma_j^x \sigma_j^y$$

[Equ. 28]

as presented above in equations 27 and 28 or as present elsewhere herein.

The second one is a 'mixing' Hamiltonian , non-commuting with the graph Hamiltonian. Such a Hamiltonian can be:

$$\hat{\mathcal{H}}_M = \sum_{i\in\mathcal{V}} \sigma_i^x$$

[Equ. 29]

In neutral atom devices, a unitary evolution following $H_M$ is implemented by applying EM radiation, for example laser pulse on the system, whereas an evolution following $H_G$ is implemented by letting the system evolve freely.

The process may start with a parameterized Hamiltonian evolution on graphs. The system starts in a predefined state $|\psi_0\rangle$. After an initial pulse with $H_M$ on intensity $\theta_0$, we alternatively let the system evolve with $H_G$ (for a duration $t_i$) and $H_M$ (for an intensity $\theta_i$). This time evolution can be summed up in the set of parameters $\Lambda = \{\theta_0, t_1, \theta_1, \ldots, t_p, \theta_p\}$. After the time-evolution the system ends up in the state:

$$|\psi_f\rangle = \prod_{i=1}^{p}\left(e^{-i\hat{\mathcal{H}}_M\theta_i}e^{-i\hat{\mathcal{H}}_G t_i}\right)e^{-i\hat{\mathcal{H}}_M\theta_0}|\psi_0\rangle$$

[Equ. 30]

After such an evolution, one can compute the expectation value of an observable such that:

$$A(\theta)_{ij} = A(\theta)_{ji} = \langle\psi_f|O_{ij}|\psi_f\rangle$$

[Equ. 31]

For example, one can take $O_{ij} = Z_iZ_j$. We set $A_{ii} = 0$.

Normalization and rescaling. We rescale the computed correlation matrix for each coefficient to be positive and the weight summing to 1 for each node. We then set:

$$A(\theta)_{ij} = softmax_i(a\sqrt{N}\,\langle\psi_f|Z_iZ_j|\psi_f\rangle)$$

[Equ. 32]

where N is the number of nodes and '$\alpha$' is a learnable coefficient. The matrix is rescaled with a pre-factor in order to amplify the differences between the coefficient. Without rescaling the maximum ratio between probability coefficients is $e^2 \sim 7$. With rescaling this ratio becomes:

$$e^{2\sqrt{N}}$$

[Equ. 33]

Quantum attention networks. We describe here a particular type of architecture using the ideas mentioned above. We call it "Quantum Attention Networks" (QAN) because of the similarity with Graph ATtention networks (GAT). Indeed, we are learning weights of interactions between the nodes.

The building block of QAN is the quantum attention head. The quantum attention head is computed with the following formula:

$$HEAD = \sigma((A(\theta)H||H)W)$$

[Equ. 34]

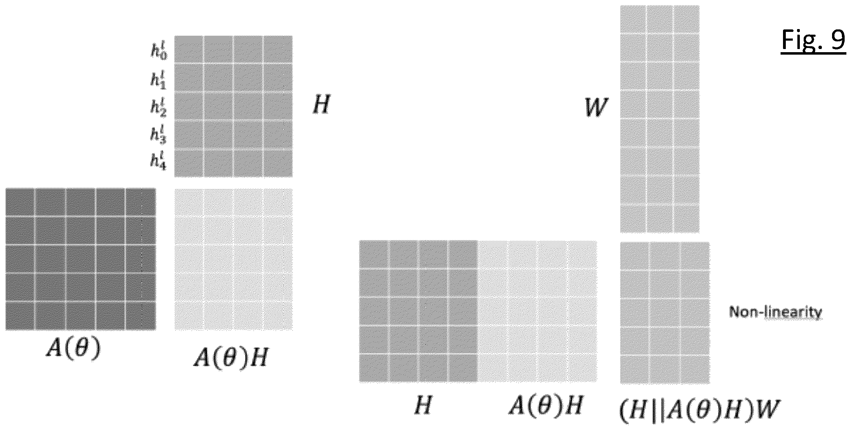

where $\sigma$ is a non-linearity, H is the node feature matrix of size (N $\times$ d) where each row represents a node feature of dimension d, W is a learnable weight matrix of size (2d $\times$ $d_h$), A($\theta$) is a learnable quantum weight matrix, or quantum attention matrix with parameters $\theta$ and $||$ is the concatenation on the columns. Figure 9 illustrates the explained mechanism. In figure 9, the node features are concatenated with the features aggregated by the quantum attention matrix. The obtained vector is the input of a learned linear operation followed by a non-linearity.

Multi Head Layer. The multi head layer is defined by a concatenation of several independent heads, as it is done in GAT like many other attention-based architectures. The update formula is given by:

$$H^{l+1} = \Big\|_i^{N_{heads}} HEAD_i(H^l)$$

[Equ. 35]

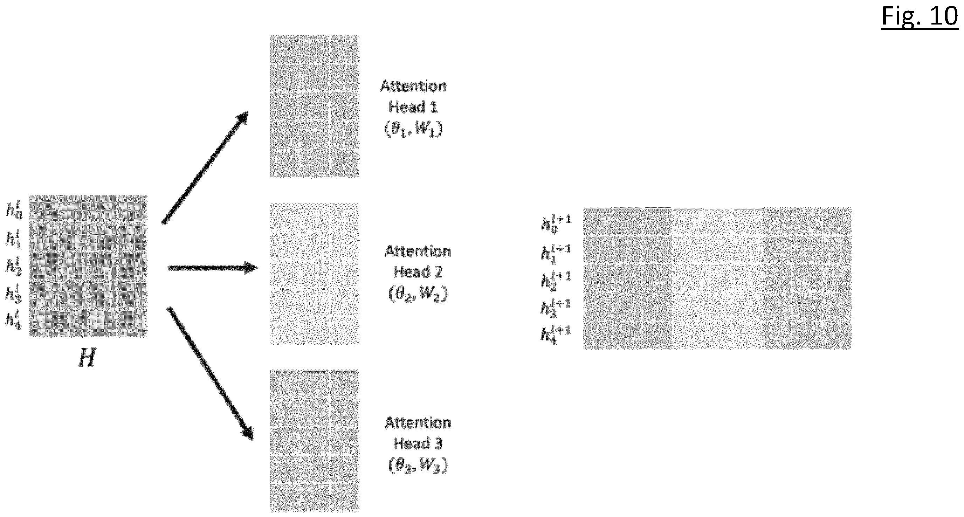

where $H^{l+1}$ is the feature node matrix at the layer I + 1 and $H^l$ is the feature node matrix at the layer I. ‖ denotes the concatenation operator. The mechanism is illustrated figure 10. In figure 10, the multi-head layer is the concatenation of several quantum attention head. Each head is parameterized by the quantum parameters and the classical linear weight matrix.

The total dimension of the feature vector is $N_{heads}d_h$. Each head possesses a different quantum circuit attached, by the formula of the quantum attention matrix. Each head can be computed in parallel if one possesses several QPUs.

Trainability. The gradient of the different parameters of the circuit can be computed as a classical function of the weight matrix $A(\theta)$ and the gradient of the weight matrix $\partial_\theta A$ with backpropagation. $A(\theta)$ being computed for evaluation, the only remaining difficulty is computing $\partial_\theta A$. To doing so, one can use the parameter-shift rules, which in some cases provides the gradient with respect to $\theta$ with a required number of quantum circuits linear in the number of parameters.

Experiments. We tested our algorithm on several standard datasets. PTC FM, PROTEINS, IMDB-BINARY are binary classification datasets whereas IMDBMULTI is a multi-category classification dataset. Each dataset was truncated to graphs between 4 and 20 nodes. The input features were chosen as the 4 eigenvectors of the Laplacian matrix with smallest positive eigenvalues. We compared it to three standard GNN architectures, GCN, GraphSAGE and GAT each with 2 layers and 64 hidden dimensions. We tested two architectures of our model both with 64 hidden dimension, Quantum 1 with 2 layers of one attention head with 4 parameters and Quantum 2 with 1 layer of 4 attention heads with 3 parameters. We performed for each model and each dataset a 5-fold cross-validation. Table 1 summarizes all the results. Table 1 benchmarks the architecture of the methods and system presented herein against classical GNNs architectures. Quantum 1 comprises 2 layers, 1 head 4 parameters, Quantum 2 comprises 1 layer 4 heads 3 parameters. We display the average accuracy of 5-fold cross-validation.

Table 1

| Model | PTC_FM | PROTEINS | IMDB-BINARY | IMDB-MULTI |
|---|---|---|---|---|
| GCN | **70.3** | 72.5 | **75.3** | 49.3 |
| GraphSAGE | 69.3 | 74 | 73.1 | 49.1 |
| GAT | 67.6 | 74 | 71.6 | 47.8 |
| Quantum 1 | 69.3 | **74.7** | 73.2 | 49.9 |
| Quantum 2 | 68.6 | 69.4 | 71 | **51.2** |

Example implementation on non-analogue quantum computers

In this section, we provide some indications on how to implement the procedure on digital computers such as gated quantum computers, for example neutral atom gated quantum computers. Let us consider the state

$$|\psi\rangle = \exp(-i\, H_M \theta)\, \exp(-i\, H_G t)\, |\psi_0\rangle$$

[Equ. 36]

with

$$\hat{\mathcal{H}}_M = \sum_{i=1}^{N} X_i$$

[Equ. 37]

being the mixing Hamiltonian, and HG being the graph Hamiltonian.

The exp(-i $H_M\theta$) factor can be easily implemented on any platform by applying an RX($2\theta$) gate to each qubit.

Hamiltonians with commuting terms like the Ising one with the formula:

$$\sum_{i,j} Z_i Z_j$$

[Equ. 38]

are similarly implementable, by performing a sequence of exp(-iZZt) gates. If the connectivity of the device does not allow such gates for some pairs of qubits, one have to use SWAP gates.

In the case of Hamiltonians with non-commuting terms like the XY Hamiltonian:

$$\hat{\mathcal{H}}_{XY} = \sum_{i,j} X_i X_j + Y_i Y_j$$

[Equ. 39]

one can approximately prepare the exp(-I $H_G$t) state with a troterrization. It consists of writing:

$$\exp(-i\hat{\mathcal{H}}_{XY}t) = \prod_{m=1}^{M} \exp\left(-i\frac{XX}{M}mt\right) \exp\left(-i\frac{YY}{M}mt\right)$$

[Equ. 40]

and applying the sequence of exp(-i(XX/M) mt) and exp(-i(XX/M) mt) gates with SWAP gates if required.

Optional uses

As described above, there may be different uses for the methods and systems described herein. Underneath describes such problems in more detail given with respect to the method (however systems for Quantum enhancing a GNN are equally applicable).

For a node classification problem, the method is typically for labelling samples. The samples are represented as the graph nodes. The labelling may be achieved, at least in part by incorporating features of the labels of a node's neighbours. This problem may be trained in a semi-supervised way, with, optionally, only a part of the graph being labelled.

For a graph classification problem, the method is typically for classifying the entire graph into different categories. Example applications of graph classification include bioinformatics, network analysis (for example social networks); natural language processing (NLP),

For a graph visualization problem, the method is typically for generating visual representations of graphs. Such representations may reveal (and help a user understand) aspects of the graph data. Such aspects may be structures and anomalies present in the data.

For a link prediction problem, the method is for helping to understand the relationship between entities in graphs. The method may furthermore predict connections between two entities, for example in a network. The method may be used in recommender system problems.

For a graph clustering problem, the method is associated with the clustering of graph data which may be either vertex clustering or graph clustering. Graph clustering treats graphs as objects to be clustered and may clusters these objects based on similarity. Vertex clustering clusters graph nodes into densely connected groups based on either edge distances or edge weights.

General example of a neutral atom quantum computer system set-up

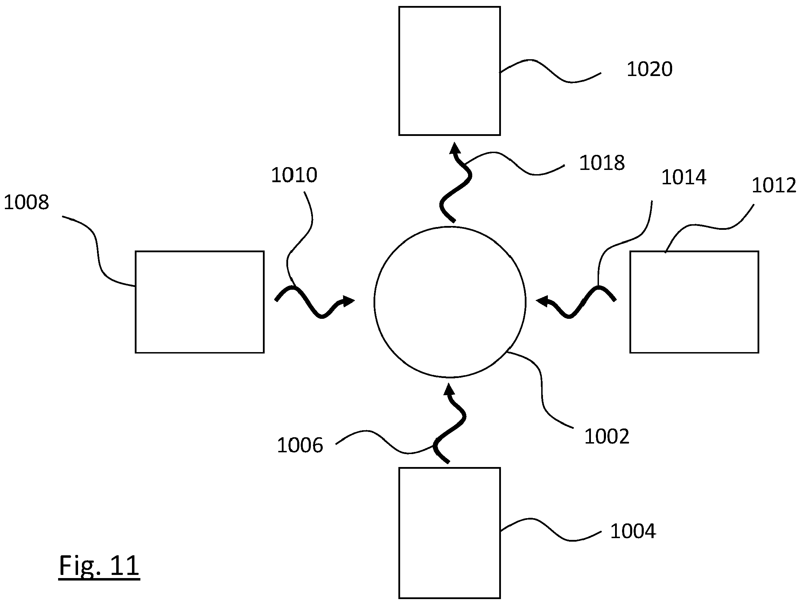

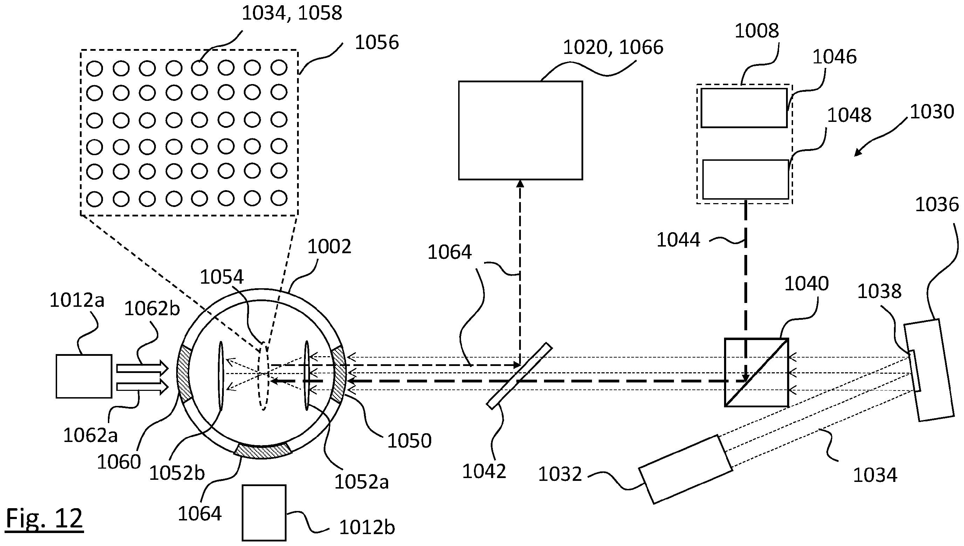

There now follows a discussion of an example analogue quantum computing system for use with the method and system presented herein. As discussed above, the method may in principle be applied to other analogue quantum computers such as ion trapped QCs. The method may be enacted by an apparatus, a system of components, a device or a plurality of devices. Figure 11 shows a general schematic of a set-up for neutral atom quantum computer. The set-up may be referred to as a 'quantum computing system'. Figure 12 shows a further, more detailed, example of such a set-up.

As a schematic, the positions and configurations of the elements in figure 11 are not supposed to imply any real-world size, positioning or configuration of features, but merely to illustrate an example of the key functioning components of a neutral atom quantum computing system that can be used with the methods and system discussed herein.

In figure 11, a chamber 1002 is provided that accommodates a plurality of atoms. The atoms are of the same element, hence are, from a chemical standpoint, identical when no external interactions are imposed upon them. The atoms are unbound to other atoms in the group, for example, by being in a gaseous matter state. Atoms used in the chamber 1002, for trapping, positioning and atomic-state-manipulating may be any suitable atom, for example, but not limited to, any of Rubidium, Caesium, Strontium and Ytterbium. Other elements or element groups may also be used. Preferably the atoms used are those having one or two valence electrons such as alkali metals and alkali earth metals however others may also be used such as rare earth elements.

A group of the atoms are held by a holding apparatus 1004. The holding apparatus 1004 acts to isolate each individual atom such that each atom, in the group, is held in a different point in space (to the other atoms of the group) within the chamber 1002. The term 'isolate' in this context means that the atoms are held away from each other, in space, and do not nominally interact (when in a non-excited atomic state) with adjacently held atoms of the same group. The atoms are thus maintained in a desired position for a period of time longer than they would be in that position if no holding apparatus 1004 were used and the atoms were allowed to move freely. If the atoms are acted upon by an input stimulus such as, for example, an electromagnetic signal of one or more photons, held atoms may interact with other held atoms using particular physical effects such as, but not limited to, the Rydberg blockade. There may be a pattern of spatially separated traps. The pattern may be an array of regular or irregular spaced traps. The pattern may be 1D. The pattern may be 2D insofar that the traps in the pattern all align along one plane. The pattern may be 3D. An example of a set of traps is a 3D array of traps spaced periodically in all of X, Y and Z dimensions, for example a 3D grid. Other patterns are also possible. The spacing in one spatial dimension may be the same or different to the other spatial dimensions.

The holding apparatus 1004 may act to maintain the atoms in their respective stationary positions using different mechanisms including, but not limited to, magnetics traps and optical traps. The holding apparatus 1004 may provide a plurality of trap sites wherein, when first activated to output the traps, typically some trap sites are filled by one or more atoms whilst other trap sites are vacant. Preferably the holding apparatus 1004 is configured to present trap sites that hold only one atom at a time. In figure 11 we assume that the holding apparatus 1004 uses one or more electromagnetic signals, such as optical signals 1006, that are input into the chamber 1002 to affect the optical traps. The electromagnetic signals may be any suitable wavelength, including but not limited to 800-1500nm, more preferably 820 - 880nm. Figure 11 shows the holding apparatus 1004 being external to the chamber 1002, however, the holding apparatus 1004 may form part of the chamber 1002 or be inside the chamber 1002. Although only a single holding apparatus 1004 is shown in figure 11, it is envisaged that more than one holding apparatus 1004 may be used.

An atom positioner 1008 is also shown in figure 11. The atom positioner 1008 is an apparatus that is able to controllably move one or more held atoms from one spatial position to another spatial position. For example, the atom positioner 1008 may move an atom trapped in one of the optical trap sites to another different trap site. Figure 11 shows the atom positioner 1008 being external to the chamber 1002, however, the atom positioner 1008 may form part of the chamber 1002 or be inside the chamber 1002. Furthermore, the atom positioner 1008 and holding apparatus 1004 may be part of the same device or system for holding and moving the atoms. The atom positioner 1008 may use different technologies to manipulate the position of the atoms including, but not limited to, moving the atoms using magnetic signals or electromagnetic signals such as optical signals 1010. The electromagnetic signals may be any suitable wavelength including, but not limited to, 800-1500nm, more preferably 820 - 880nm. In figure 11 we assume that optical signals 1010 are used such as, but not limited to, optical tweezers. Although only a single atom positioner 1008 is shown in figure 11, it is envisaged that more than one atom positioners 1008 may be used.

An atomic state actuator 1012 is also shown in figure 11. This atomic state actuator 1012 outputs one or more signals to control and manipulate the atomic states of one or more of the atoms in the chamber 1002, preferably the trapped atoms, i.e., it actuates the transition between atomic states. The signals output by the atomic state actuator 1012 are electromagnetic signals 1014 of one or more photons. Different signals may be output by the atomic state actuator 1012 including signals at different wavelengths. Each wavelength may correspond to (i.e., be resonant with) a different atomic transition. The atomic transition may occur through single-photon absorption or multiple-photon absorption, such as two-photon absorption. This may be accomplished using two (or more) different EM sources such as lasers or other EM sources. These two EM sources may have different wavelengths.

Although only a single atomic state actuator 1012 is shown in figure 11, it is envisaged that more than one atomic state actuator 1012 may be used. For example, a first atomic state actuator 1012 may output a different wavelength or set of wavelengths than a second atomic state actuator 1012. The atomic state actuator may facilitate the transition between atomic states of a single trapped atom or a plurality of trapped atoms. For example, two or more, three or more, trapped atoms, or all of the trapped atoms. Figure 11 shows the atomic state actuator 1012 being external to the chamber 1002, however, the atomic state actuator 1012 may form part of the chamber 1002 or be inside the chamber 1002. The electromagnetic wavelength for transitioning a rubidium atom to the Rydberg state may be 297nm. The electromagnetic wavelength for transitioning a Caesium atom to the Rydberg state may be 318.6nm.

Preferably any electromagnetic signals used to trap and move the atoms are preferably different, at least in wavelength, to the electromagnetic EM signals used to manipulate the quantum states of the atoms. In particular, any EM signals for trapping and moving the atoms are preferably off-resonance, i.e., the wavelength of the holding and positioning electromagnetic signals do not act to excite the atom between different atomic states.

A detector 1020 is also shown in figure 11. This detector 1020 is used to monitor electromagnetic signals 1018 output from the atoms in the chamber 1002. This detector 1020 may comprise a camera. The camera may be used to image the fluorescence output by the atoms held by the holding apparatus 1004. Figure 11 shows the detector 1020 being external to the chamber 1002, however, the detector 20 may form part of the chamber 1002 or be inside the chamber 1002.

An example of the general operation of the neutral atom quantum computing system may be as follows, wherein any of the following steps may be omitted, combined, rearranged in order, or adapted using features from other examples herein. Furthermore, other steps may be included before, at the same time, or after any of the steps listed below.

A) Firstly, the holding apparatus 1004 emits signals into the chamber 1002 to create a plurality of optical traps.
B) Some of the ensemble of atoms in the chamber 1002 are automatically trapped by the plurality of traps.
C) The atom positioner 1008 is then optionally used to move some, or all, of the trapped atoms between traps so that at least a particular set of the traps are each filled by an atom. This set of traps may be referred to as a 'register'. The detector 1020 may be used in this process to help identify which traps are occupied or vacant. In some examples the atom positioner 1008 may not be required.
D) The atomic state actuator 1012 outputs one or more electromagnetic signals 1014 to control atomic state transitions of at least one of the atoms. This step may be performed a plurality of times to implement processing operations of the quantum computer, for example, time-sequentially inputting a plurality of electromagnetic signals that provide an amplitude-time profile and a frequency-time profile.
E) The detector 1020 is used to determine the atomic states of the atoms after the signals in step D) have been performed.

The quantum system may be re-set by at least removing the traps. The quantum system may then be re-initialised for a further quantum computation by repeating steps A)-E) above for a further time period.

Any features described above in the above general example of a neutral atom quantum computer set-up of figure 11, including but not limited to: the atoms used; the atomic state actuator 1012; the atom positioner 1008; the holding apparatus 1004; the detector 1020; the general operation; may be used with any other example presented herein.

Detailed example of a neutral atom quantum computer system set-up

Figure 12 shows a specific, non-limiting, example of a neutral atom quantum computing/system setup 30 that may be used with the method or system presented herein. The chamber 1002 is a vacuum chamber and a dilute atomic vapour is formed inside the chamber 1002. The chamber 1002 is an ultra-high vacuum system operating at room temperature, however other environmental temperatures may be formed inside the chamber 1002. Figure 12 is a more detailed example of figure 11 wherein like references in the figures represent like components.

This set-up may be adapted according to any teaching herein including, but not limited to, the features described above for figure 11. The set-up in figure 12 may also be referred to as a 'quantum processor' or 'quantum system'. It is to be understood that the example in figure 12 is just one example of a set-up for a quantum processor and provides a 2D array of optical trapping sites, however other set-ups may be used, for example to implement a 3D array of trapping sites by including a plurality of the below-mentioned components and/or different component locations and/or configurations. The example in figure 12 may also be adapted by removing components, adding components, combining components and re-positioning components.

In figure 12 a laser system 1032, comprising a laser and beam-expanding optics, outputs a cross-sectionally-wide collimated laser beam 1034 towards a spatial light modulator (SLM) 1036. The SLM 1036 and the laser system 1032 being equivalent to the holding apparatus 1004 in figure 12. The SLM 1036 comprises a 2D periodic array of controllable deformable mirrors 1038 which receive the collimated beam 1034 and selectively reflect portions of the beam 1034 towards a polarising beam splitter (PBS) 1040. The SLM 1036 outputs an adjustable phase pattern on the light 1034, that in turn gets converted into an intensity pattern 1058 by first lens 1052a, as described later. The polarisation of the reflected portions of the beam 1034 pass through the PBS 1040 and propagate towards a dichroic mirror 1042. It is understood that the laser system 1032 may have other components such as a polarisation rotator (not shown) for controllably adjusting the polarisation of output light 1034 incident upon the SLM 1036, so that the polarisation of light 1034 is aligned to the transmission axis of the PBS 1040.

The PBS 1040 also receives electromagnetic signals 1044 from an atom positioner 1008 comprising a laser 1046 and a 2D acousto-optic laser beam deflector 1048 that receives laser light from the laser 1046 and controls the direction of the laser light into the PBS 1040. In turn, this allows the deflector 1048 to use the laser light 1044 as an optical tweezer or an array of optical tweezers. The light 1044 output from the atom positioner 1008 is reflected by the PBS 1040 such that it is output from the PBS 1040 along a substantially similar path to the light 1034 output from the PBS 1040 that originates from the laser system 1032. The light beams 1034 and 1044 may at least partially overlap in space when output from the PBS 1040. The light 1044 originating from positioner 1008 that is reflected and output by the PBS 1040 is incident upon the dichroic mirror 1042.

It is noted that the position and direction of light rays in figure 12, such as beams 1034 and 1040, are shown spatially separate to each other, however this is merely for purposes of visual clarity in the figure and may not represent the beam positions in practice.

Both the light 1044 and 1034 output from the PBS 1040 pass through the dichroic mirror 1042 and are incident upon window 1050 of the chamber 1002. The window 1050 may be one of a plurality of windows in the chamber 1002 that are at least partially transparent to the wavelengths of the light that are incident upon them that are generated by the electromagnetic sources of the system 1030. The window 1050 forms part of the body of the chamber 1002 and is sealed with respect to the walls of the chamber such that the chamber 1002 holds a vacuum environment within it. Other components may be associated with the vacuum chamber 1002 by either being inside the chamber 1002, integrated with the chamber 1002 or immediately surrounding the chamber 1002 insofar that the components may input stimuli into the chamber 1002, such as electromagnetic fields or magnetic fields. One or more magnetic coils (not shown) may be included about the chamber 1002 to provide a spatially-varying magnetic field that, with the laser light 1034, acts to provide a magneto-optical trap (MOT). The laser light 1034 may have a wavelength configured to cool the atoms via the mechanism of doppler cooling. The light 1034 may be split and/or reflected by other optical components (not shown) to provide a plurality of beams propagating along different directions that intersect the trapping area 1054. Such beams may be used to provide cooling in a plurality of directions such as along X, Y, and Z cartesian axes. Further laser light beams from one or more further sources may be used to cool and trap the atoms. The coils may comprise two coils in an anti-Helmholtz configuration that are used to generate a weak quadrupolar magnetic field to facilitate, with the laser light 1034, the magneto-optical trap. The quantum system 1030 may use different forms of trapping mechanisms and associated equipment to trap the neutral atoms, as known in the art, for example, but not limited to any of the trapping and cooling systems described in: "Harold J Metcalf and Peter van der Straten. Laser cooling and trapping of atoms. JOSA B, 20(5):887-908, 2003" the entire contents of which are included herein by reference.

Inside the chamber 1002 are a pair of convex lenses 1052a, 1052b. The first lens 1052a is positioned to receive light beams 1034 and 1044 passing through the window 1050 and focus them both onto a trapping area 1054 of minimum beam waist (i.e., at the focal plane of the lens 1052a). The second lens 1052b is located on the opposite side of the focal plane and captures light exiting the trapping area 1054 and focusses or collimates the light into a plurality of light beams that may be incident upon: a beam dump inside the chamber 1002 (not shown) or another chamber window 1060 that allows the light to escape the chamber 1002.

An expanded view 1056 of the focal plane in area 1054 is also shown in figure 12 wherein an array of optical trapping sites 1058 are shown that are created from the mirrors 1038 of the SLM 1036 reflecting portions of the light 1034.

Figure 12 further shows two atomic state actuators 1012a/b that take the form of lasers that output light for manipulating the states of the atoms trapped at the trapping sites 1058. In figure 12, actuator 1012a is a system comprising two (or more) lasers, each laser may output light at a different wavelength 1062a/b. Different wavelengths may match different atomic transitions of the atomic system (or 'ensemble') held in the chamber 1002, alternatively a photon from each of the different wavelengths 1062a/b may be used in two photon absorption process. Alternatively, the two atomic state actuators 1012a/b may output the same wavelength. In the alternative, a single atomic state actuator 1012a may be used.

The light from the actuator 1012a is incident upon a chamber window 1060, through which the light travels and is incident upon the second lens 1052b. The lens 1052b, in turn focusses the light onto the atoms in the trapping sites 1058. A further atomic state actuator 1012b is shown positioned, about the plan view of the chamber 1002, orthogonally to the first actuator 1012a. This second actuator 1012b may be substantially similar to the first actuator 1012a where a further chamber window 1064 allows light output from the second actuator 1012b into the chamber 1002. The second actuator 1012b may be used to help address and manipulate atoms, particularly when the system provides a 3D array of optical traps. The optical components for focussing light inside the chamber 1002 from the second actuator is not shown in figure 12.

It is to be understood that figure 12 and its accompanying description is an example of a setup for a neutral atom quantum computer. The atomic state actuators 1012 may be positioned in different locations, including inside or outside the chamber 1002 or part of the chamber 1002. There may also be one or a plurality of different actuators 1012. The actuators 1012 may be integrated or otherwise co-located with other electromagnetic sources such as the laser 1046 or laser system 1032. It is also to be understood that the quantum system 1030 may include other optical or electronic components and/or configurations to allow the neutral atoms to be addressed by the different electromagnetic sources.

Light, for example fluorescence, emitted by the trapped atoms may be output from the chamber 1002 through any of the windows 1050, 1064, 1060. In figure 12, the light 1064 emitted from the trapped atoms travelling out of the window 1050 is, prior to exiting window 1050, collimated by the first lens 1052a. This light 1064, once exited window 1050, is incident upon the dichroic mirror 1042. The dichroic mirror 1042 reflects the emitted light 1064 towards a camera 1066 (which is equivalent to the detector 1020 in figure 11). The camera 1066 may be an electron-multiplying charge-coupled-device (EMCCD) camera. The dichroic mirror 1042 may have an edge or pass-band characteristic filter response that substantially reflects emitted light 1064 but substantially transmits light 1034 and 1040.

Figure 12 is shown as a collection, or system, of separate components, including bulk-optic devices wherein light is propagated between components using free-space propagation. It should be appreciated that other versions of the quantum system set-up 1030 may be implemented using fibre-optics or integrated optic components.

The components of the quantum system 1030, such as, but not limited to, laser system 1032, atom positioner 1008, camera 1066, actuators 1012a/b may be controlled by a classical computer system running one or more pieces of software and/or providing manual user input through an interface to control these components. Details of classical computer system features are provided elsewhere herein.

Example of operating the quantum processor

There now follows an example of operating a quantum processor such as, but not limited to the set-up as shown in figure 12. The atoms in this example are rubidium atoms, however other atoms may be used.

The atoms in the chamber 1002 are initially not in an arrangement suitable for performing quantum computing operations. To get the atoms in an arrangement for quantum processing, a 3D MOT is initiated, as described above, wherein a cold ensemble of $10^6$ atoms with a $1mm^3$ volume is prepared inside the trapping area 1054. This array of atoms may be referred to as a 'register' and steps of locating atoms in the trapping sites may be referred to as 'register loading'. The optical tweezers using light 1044 isolate individual atoms in the ensemble. The trapping volume of a tweezer may be between $1\text{-}10\mu m^3$ or generally in the order of a few $\mu m^3$. Such a volume may trap at most one atom at a time. The number and arrangement of tweezers may be in any 1D, 2D or 3D pattern. The tweezers may be tailored by holographic methods known in the art such as, but not limited to that described in: "Florence Nogrette, Henning Labuhn, Sylvain de Leseleuc, Thierry Lahaye and Antoine Browaeys. Synthetic three-dimensional atomic structures assembled atom by atom. Nature 561 (7721):79-82, September 2018"; the entire contents of which are included herein by reference.

When first initiated, the trapping sites of the register may each hold an atom, but in practice the sites will not all initially be occupied, for example only 50% may be occupied. This occupation may be in a non-ordered or random manner. As such a sub register may be formed from the initial register by determining which sites are occupied and then using the tweezer light beam to move atoms from one site to another so that at least one set of two or more trapping sites are occupied according to a predetermined arrangement, for example a 3D periodic grid of atom-occupied sites. Each site in the sub register holds a single atom, hence has unit filling. This may be referred to as being a defect-free sub-register wherein a defect is a site in the sub-register that is intended to be filled but is not, or conversely, a site that is intended to be unfilled but is filled. Other sub register atom arrangements are also possible.

To determine where the atoms are initially held in the register, the atoms are imaged by collecting their fluorescence on the camera 1066. From these one or more images a program run on a classical computer system may be used to determine the position of the initially occupied sites 1058. Additionally, or alternatively a user may provide input to determine such positions. When a classical computer is used, an algorithm may be used to determine a set of moves, for the tweezers, to rearrange the initial configuration to the desired predetermined configuration. The algorithm may be run on a GPU to affect real time processing. A Field Programmable Gate Array (FPGA) may be used to transfer the data in this operation. The data that corresponds to the required 'moves' is then communicated to the 2D acousto-optic laser beam deflectors 1048.

Optionally a further image may be acquired in a similar way as described above to check whether the sub-register formed has atoms in the predetermined positions. Furthermore, when any quantum processing is complete, the sub-register may be read out in a similar way using the camera 1066. The above process of setting up a sub register is optional; the use of the atoms in the register may be performed, in principle, without the need for setting up a sub register.

Rydberg entanglement

We now discuss, for neutral atom quantum computers the inter-atom interactions, hence entanglement between the qubits.

It is appreciated that in examples described elsewhere herein the quantum states of a neutral atom quantum computer can be represented by two Rydberg states of an atom, however the following general discussion of Rydberg states and entanglement is provided for context, particular where the method and system are implemented in a quantum gate-form as discussed elsewhere herein, wherein the Qubit would be encoded in two distinct hyperfine states of the atoms. The Rydberg level would then be used in a transient manner during entangling gates.

Neutral atoms in their electronic ground state can only interact significantly via contact physical collisions. Single atoms are typically separated by a few micrometres in the register and therefore do not naturally 'feel' each other, therefore they do not normally interact. EM pulses imparted on the qubits may cause different qubits to interact using Rydberg states, in particular through the Rydberg blockade effect. An atom in a Rydberg state or a 'Rydberg atom' is an excited atom with one or more electrons that have a very high principal quantum number, n, entailing that the electron is far from the nucleus and thus allows that atom to interact with another atom. The laser 1012a/b used to impart light at the wavelength needed for the Rydberg transition may be referred to as the Rydberg laser. The Rydberg laser and its output light may be referred to herein as the 'Rydberg channel'.

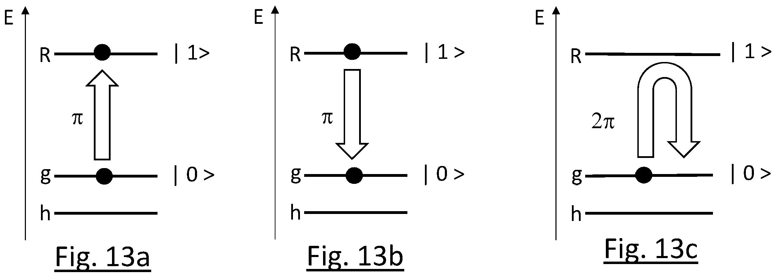

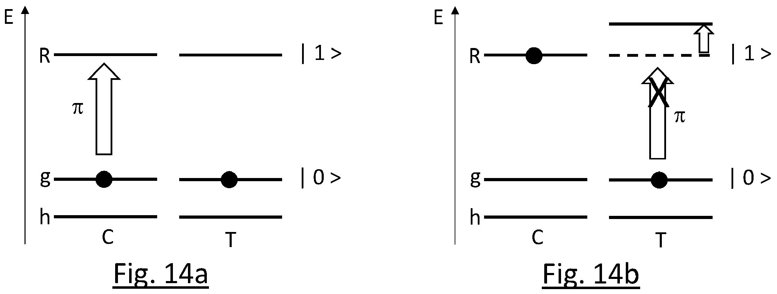

Figures 13a-13c schematically show three levels of the atomic system of the rubidium atoms used herein wherein: the energy levels 'g' and 'h' denote the hyperfine states wherein the state 'g' represent the |0 > qubit states respectively, whilst 'R' represents the Rydberg state which is the | 1 > qubit state of the atomic system. The examples in figures 13a-13c and 14a, 14b are used for illustrative purposes to explain the Rydberg blockading effect using different single pulses to transition the atom from a ground to a Rydberg state, however in an analogue system the EM signal inducing a blockade may be a series of EM pulses and/or a continuous EM signal spanning the duration of the quantum calculation before the qubit measurements are made.

The label of '$\pi$' in figures 13a and 13b is shown when a single transition is made between the | 0 > and | 1 > state indicating that a $\pi$ change in $\theta$ has been imparted into the atomic system because of the overall transition. Similarly, when a laser field of sufficient duration and amplitude has been imparted onto the atom to transition it from the 'g' energy level up to the R energy level and then back to the g energy level (within the same control field input), this is labelled as '2$\pi$' indicating that a 2$\pi$ change in $\theta$ (i.e., a full Bloch sphere rotation) has been imparted into the atomic system because of the overall transition. It is understood that the input control fields causing these transitions in figures 13a-c have a wavelength resonant with the |0 > to |1 > transition. Figure 13a shows the atomic transition from the g level to the R level with a $\pi$-pulse. Figure 13b shows the atomic transition from the R level to the g level with a $\pi$-pulse. Figure 13c shows the atomic transition from the g level to the R level and back to the g level again with a 2$\pi$-pulse.

An example of the Rydberg blockade is the situation where two neighbouring atoms are both in the |0 > state, i.e., both at the g energy level as shown in figure 14a. In figure 14a, the above energy levels are shown for two identical rubidium atoms wherein, for this explanation, the first atom is termed the 'control' atom (or control qubit), labelled 'C'; whilst the second atom is termed the target atom (or target qubit) labelled 'T'. The Rydberg blockade may come into effect when one of the atoms, for example the control atom C is transitioned to the R energy level with a $\pi$-pulse as shown in figure 14a. At a time after the C atom has transitioned to the R state, the equivalent R state energy level for the T atom is raised above its normal energy level due to the effect of the C atom being in a higher energy state. If a $\pi$-pulse is then introduced to the T atom whilst this 'blockade' is in effect, as shown in figure 14b, the $\pi$-pulse will not transition the T atom from the g energy level to the R energy level due to the frequency of the laser being detuned from the frequency difference between the Rydberg-energy level and the g-energy level. As such, the T atom remain in the g state. The Rydberg blockade may therefore be used to enable the state of one qubit (C atom) to affect the state of another qubit (T atom). The cross over the arrow in figure 14b, indicates that the transition did not occur.

Rydberg atoms strongly interact in a way that can be mapped into spin Hamiltonians. Depending on the Rydberg states that are involved in the process, the spins experience different types of interactions that translate into different Hamiltonians. It could be, but is not limited to, dipole-dipole or Van der Waals interaction. When the |0 > state is one of the ground states of and the |1 > is a Rydberg state, this may map to the Ising model which uses discrete variables representing magnetic dipole moments of atomic "spins" that can be in one of two states. The Hamiltonian of an atomic system using ground-Rydberg states for the different spins may be represented by equation 41.

$$\mathcal{H}(t) = \frac{\hbar}{2}\Omega(t)\sum_j \sigma_j^x - \hbar\delta(t)\sum_j n_j + \sum_{i \neq j}\frac{C_6}{r_{ij}^6}n_i n_j$$

[Equ. 41]

In this equation, the Rydberg state occupancy is: $n_j = (1 + \sigma_j^z)/2$ wherein $\sigma^x$ and $\sigma^z$ are the Pauli matrices of the spin 'j'. The Rabi frequency is $\Omega(t)$ and can be changed by changing the intensity-time profile of the input EM radiation. The detuning is $\delta(t)$ and can be changed by changing the frequency (i.e., wavelength)-time profile of the input EM radiation.

The first two terms are induced by the laser that couples the qubit states and relate to an effective magnetic field, with transverse B component proportional to $\Omega(t)$ and the longitudinal B component proportional to $-\delta(t)$. These two terms describe how individual spins would precess in the presence of an external magnetic field.

The third term in equation 41 relates to the interactions between individual spins. More specifically, it corresponds to an energy penalty that two qubits experience if they are both in the Rydberg states at the same time. The coupling between two spins i and j is of van der Waals type and depends on the inverse of the distance between them $r_{ij}$ to the power of 6, and on a coefficient C6 relative to the Rydberg state.

The system may use other spin states associated with Rydberg states. Instead of using a ground and Rydberg state, the system may use two Rydberg states that are dipole coupled. These states may be $|nS>$ and $|nP>$. Such a system may be described by a different Hamiltonian, namely the XY Hamiltonian represented by Equation 42.

$$\mathcal{H}(t) = \frac{\hbar}{2}\Omega(t)\sum_j \sigma_j^x - \frac{\hbar}{2}\delta(t)\sum_j \sigma_j^z + 2\sum_{i\neq j}\frac{C_3}{r_{ij}^3}\left(\sigma_i^x\sigma_j^x + \sigma_i^y\sigma_j^y\right)$$

[Equ. 42]

The first two terms in equation 42 are typically induced by a microwave field.

The third term in equation 42 corresponds to a coherent exchange between the spin states, transforming the pair state $|01>$ to $|10>$.

Other Hamiltonians may be used such as the XXZ model. Examples of a NAQC using Rydberg atoms in optical offer a favourable quality factor $Q \sim 10^2$, given by the ratio of coherent evolution rate over the decoherence rate.

Optional examples of features of a classical computer/computing system for use with the method

Some portions of the above description present the features of the method/system in terms of operations on information performed by a classical computer. These operations, while described functionally or logically, are understood to be implemented by computer programs and/or via dedicated hardware. Furthermore, the reference to these arrangements of operations in terms of modules should not be considered to imply a structural limitation and references to functional names is by way of illustration and does not infer a loss of generality.

Unless specifically stated otherwise as apparent from the description above, it is appreciated that throughout the description, discussions utilising terms such as "processing" or "identifying" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the method or system include process steps and instructions described herein in the form of an algorithm. It should be understood that the process steps, instructions, of the said method/system as described and claimed, may be executed by computer hardware operating under program control, and may not be mental steps performed by a human. Similarly, all of the types of data described and claimed may be stored in a computer readable storage medium operated by a computer system and are not simply disembodied abstract ideas.

The method/system may relate to an apparatus for performing the operations herein. This apparatus may be specially constructed for the required purposes, or it may comprise a general-purpose computer selectively activated or reconfigured by a computer program stored on a computer readable medium that can be executed by the computer. Such a computer program is stored in a computer readable storage medium, such as, but not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

Any controller(s) referred to above may take any suitable form. For instance, the controller(s) may comprise processing circuitry, including the one or more processors, and the memory devices comprising a single memory unit or a plurality of memory units. The memory devices may store computer program instructions that, when loaded into processing circuitry, control the operation of the route provider and/or route requester. The computer program instructions may provide the logic and routines that enable the apparatus to perform the functionality described above. The computer program instructions may arrive at the apparatus via an electromagnetic carrier signal or be copied from a physical entity such as a computer program product, a non-volatile electronic memory device (e.g., flash memory) or a record medium such as a CD-ROM or DVD. Typically, the processor(s) of the controller(s) may be coupled to both volatile memory and non-volatile memory. The computer program is stored in the non-volatile memory and may be executed by the processor(s) using the volatile memory for temporary storage of data or data and instructions. Examples of volatile memory include RAM, DRAM, SDRAM etc. Examples of non-volatile memory include ROM, PROM, EEPROM, flash memory, optical storage, magnetic storage, etc. The terms 'memory', 'memory medium' and 'storage medium' when used in this specification are intended to relate primarily to memory comprising both non-volatile memory and volatile memory unless the context implies otherwise, although the terms may also cover one or more volatile memories only, one or more non-volatile memories only, or one or more volatile memories and one or more non-volatile memories.

The algorithms and operations presented herein can be executed by any type or brand of computer or other apparatus. Various general-purpose systems may also be used with programs in accordance with the teachings herein, or it may prove convenient to construct more specialized apparatus to perform the required method steps. The required structure for a variety of these systems will be apparent to those of skill in the art, along with equivalent variations. In addition, the method/system is not described with reference to any particular programming language. It is appreciated that a variety of programming languages may be used to implement the teachings of the invention as described herein.

## Claims

1. A method for generating a Graph Neural Network, GNN, wherein:

   i) the GNN comprises a plurality of layers wherein:

   one of the said layers is a first layer; the first layer being the initial layer or a hidden layer in the GNN; and, another one of the said layers is a second layer; the second layer being subsequent to the first layer;

   ii) the GNN being associated with a graph comprising a plurality of graph nodes and edges;
   iii) for the first layer:

   at least a first graph node of the plurality of graph nodes is represented by a first set of one or more first node features;
   at least a second graph node of the plurality of graph nodes is represented by a first set of one or more second node features; the first graph node being connected to the second graph node by one of the edges;

   the method comprising:

   I) generating, for the second layer, a second set of one or more first node features by:

   a) inputting electromagnetic, EM, radiation to at least a first qubit and a second qubit of a quantum computer; the first graph node represented by at least the first qubit; the second graph node represented by at least the second qubit; the EM radiation interacting the first qubit with the second qubit;
   b) measuring the quantum states of the first and second qubits after the start of the inputting of the EM radiation;
   c) determining an aggregation factor from the measured quantum states; and,
   d) using the aggregation factor and the first set of one or more second node features to generate the second set of one or more features for the first graph node for the second layer;
   and,

   II) generating the GNN at least based upon the generated second set of one or more first node features.

2. The method of claim 1 wherein the quantum computer comprising a neutral atom quantum computer.

3. The method of claim 2 wherein the neutral atom quantum computer is operated in an analogue mode of operation.

4. The method of claim 3 wherein each of the measured quantum states correspond to a Rydberg energy level.

5. The method as claimed in any preceding claim wherein the aggregation factor comprises a weighting factor for the edge connecting the first node and the second node.

6. The method as claimed in any preceding claim wherein determining the aggregation factor comprises applying a plurality of Hermitian operators to the measured results.

7. The method as claimed in claim 6 wherein the Hermitian operators comprise Pauli operators.

8. The method as claimed in any preceding claim wherein determining the aggregation factor comprises using a first set of Pauli operators; the first set of Pauli operators comprising a first Pauli operator and a second Pauli operator; the method comprising:

   I) applying the first Pauli operator to a measured state of the first qubit to provide a first result;
   II) applying the second Pauli operator to a measured state of the second qubit to provide a second result;
   III) determining a first observable using the first result and the second result; the first observable used to determine the aggregation factor.

9. The method as claimed in claim 8 wherein determining the aggregation factor comprises using a second set of Pauli operators; the second set of Pauli operators comprising a first Pauli operator and a second Pauli operator; wherein at least one of the Pauli operators of the first set is different to the second set; the method comprising:

   I) applying the first Pauli operator, of the second set, to a measured state of the first qubit to provide a third result;
   II) applying the second Pauli operator, of the second set, to a measured state of the second qubit to provide a fourth result;
   III) determining a second observable using the third result and the fourth result; the first and second observables used to determine the aggregation factor.

10. The method as claimed in claim 9 further comprising providing an observable weight to at least one of the first or second observables.

11. The method as claimed in any preceding claim wherein:

   a further graph node, of the plurality of graph nodes, that is different to the first graph node, is represented for the first layer by a first set of one or more further node features, the further graph node being connected to another of the graph node by one of the edges;
   the method further comprises:
   generating, at least partially using the quantum computer, a second set of one or more further node features for the further graph node for the second layer.

12. The method as claimed in any preceding claim further comprising generating a plurality of aggregation factors for use in generating, for the second layer, a second set of one or more first node features.

13. The method as claimed in any preceding claim wherein:

   A) the step of generating the GNN at least based upon the generated second set of one or more first node features, comprises:

      a first forward propagation through the layers;
      a second forward propagation through the layers;

   B) the GNN comprises an output layer comprising one or more output data;

   the method comprising:

      comparing the GNN output data from the first forward propagation to training data;
      modifying the EM radiation for the second forward propagation based on the comparison.

14. A system for generating a Graph Neural Network, GNN, wherein:

i) the GNN comprises a plurality of layers wherein:

one of the said layers is a first layer; the first layer being the initial layer or a hidden layer in the GNN; and, another one of the said layers is a second layer; the second layer being subsequent to the first layer;

ii) the GNN being associated with a graph comprising a plurality of graph nodes and edges;
iii) for the first layer:

at least a first graph node of the plurality of graph nodes is represented by a first set of one or more first node features;
at least a second graph node of the plurality of graph nodes is represented by a first set of one or more second node features; the first graph node being connected to the second graph node by one of the edges;

the system comprising a computer processor configured to:

I) generate, for the second layer, a second set of one or more first node features by:

outputting one or more control signals to an electromagnetic, EM, source for inputting electromagnetic radiation to at least a first qubit and a second qubit of a quantum computer; the first graph node represented by at least the first qubit; the second graph node represented by at least the second qubit; the EM radiation interacting the first qubit with the second qubit;
receiving measured quantum states of the first and second qubits after the start of the inputting of the EM radiation;
determining an aggregation factor from the measured quantum states;
and,
using the aggregation factor and the first set of one or more second node features to generate the second set of one or more features for the first graph node for the second layer;
and,

II) generate the GNN at least based upon the generated second set of one or more first node features.

15. The system of claim 14 further comprising the quantum computer.

16d

16b

10

16c

12

14

16a

Fig. 1

EP 4 343 621 A1

Fig. 2

EP 4 343 621 A1

Fig. 3

Fig. 4a

Fig. 4b

Fig. 5

## Fig. 6

| | S82 |
| --- | --- |
| (Optionally)<br>Providing a GNN comprising a first layer and a second layer subsequent to the first layer, wherein, for the first layer a first graph node is represented by a first set of one or more first node features; the first layer being the initial layer or a hidden layer in the GNN. | S82 |

| | S84 |
| --- | --- |
| Generating, for the second layer, a second set of one or more first node features by:<br>inputting electromagnetic, EM, radiation to at least a first qubit and a second qubit of a quantum computer; the first graph node represented by at least the first qubit; the second graph node represented by at least the second qubit; the EM radiation interacting the first qubit with the second qubit;<br>measuring the quantum states of the first and second qubits after the start of the inputting of the EM radiation;<br>determining an aggregation factor from the measured quantum states;<br>using the aggregation factor and the first set of one or more second node features to generate the second set of one or more features for the first graph node for the second layer; | S84 |

80

| | S86 |
| --- | --- |
| Generating the GNN at least based upon the generated second set of one or more first node features. | S86 |

EP 4 343 621 A1

Fig. 7

EP 4 343 621 A1

Fig. 8

Fig. 9

Fig. 10

EP 4 343 621 A1

Fig. 11

Fig. 12

Fig. 13a

Fig. 13b

Fig. 13c

Fig. 14a

Fig. 14b

EP 4 343 621 A1

Europäisches
Patentamt

European
Patent Office

Office européen
des brevets

# EUROPEAN SEARCH REPORT

Application Number

EP 22 30 6379

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LOUIS-PAUL HENRY ET AL: "Quantum evolution kernel : Machine learning on graphs with programmable arrays of qubits", ARXIV.ORG, CORNELL UNIVERSITY LIBRARY, 201 OLIN LIBRARY CORNELL UNIVERSITY ITHACA, NY 14853, 7 July 2021 (2021-07-07), XP091008829, * the whole document * | 1-15 | INV. G06N3/044 G06N10/40 G06N10/60 |
| A | GUILLAUME VERDON ET AL: "Quantum Graph Neural Networks", ARXIV.ORG, CORNELL UNIVERSITY LIBRARY, 201 OLIN LIBRARY CORNELL UNIVERSITY ITHACA, NY 14853, 26 September 2019 (2019-09-26), XP081483830, * the whole document * | 1-15 | |
| A | ZHENG JIN ET AL: "Quantum Graph Convolutional Neural Networks", 2021 40TH CHINESE CONTROL CONFERENCE (CCC), TECHNICAL COMMITTEE ON CONTROL THEORY, CHINESE ASSOCIATION OF AUTOMATION, 26 July 2021 (2021-07-26), pages 6335-6340, XP033981578, DOI: 10.23919/CCC52363.2021.9550372 [retrieved on 2021-09-27] * the whole document * | 1-15 | TECHNICAL FIELDS SEARCHED (IPC) G06N |

-/--

The present search report has been drawn up for all claims

| Place of search | Date of completion of the search | Examiner |
|---|---|---|
| The Hague | 6 February 2023 | Moro Pérez, Gonzalo |

EPO FORM 1503 03.82 (P04C01)

page 1 of 2

# EP 4 343 621 A1

Europäisches Patentamt
European Patent Office
Office européen des brevets

## EUROPEAN SEARCH REPORT

Application Number

EP 22 30 6379

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YEHUI TANG ET AL: "From Quantum Graph Computing to Quantum Graph Learning: A Survey", ARXIV.ORG, CORNELL UNIVERSITY LIBRARY, 201 OLIN LIBRARY CORNELL UNIVERSITY ITHACA, NY 14853, 19 February 2022 (2022-02-19), XP091161596, * the whole document * ----- | 1-15 | |
| T | SLIMANE THABET ET AL: "Extending Graph Transformers with Quantum Computed Aggregation", ARXIV.ORG, CORNELL UNIVERSITY LIBRARY, 201 OLIN LIBRARY CORNELL UNIVERSITY ITHACA, NY 14853, 19 October 2022 (2022-10-19), XP091348299, * the whole document * ----- | | |

TECHNICAL FIELDS SEARCHED (IPC)

The present search report has been drawn up for all claims

| Place of search | Date of completion of the search | Examiner |
|---|---|---|
| The Hague | 6 February 2023 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. BAMBERGER.** A topological Characterisation of Weisfeiler-Leman equivalence classes. *arXiv:2206.11876v1 [cs.LG,* 23 June 2022
- **JIE ZHOU et al.** Graph Neural network: A review of methods and applications. *AI Open,* 2020, vol. 1, 57-81
- **JOSA B.** Laser cooling and trapping of atoms. *Harold J Metcalf and Peter van der Straten,* 2003, vol. 20 (5), 887-908
- **FLORENCE NOGRETTE ; HENNING LABUHN ; SYLVAIN DE LESELEUC ; THIERRY LAHAYE ; ANTOINE BROWAEYS.** Synthetic three-dimensional atomic structures assembled atom by atom. *Nature,* September 2018, vol. 561 (7721), 79-82